(19) Europäisches Patentamt
European Patent Office
Office européen des brevets

(11) **EP 4 340 210 A1**

(12) **EUROPEAN PATENT APPLICATION**
published in accordance with Art. 153(4) EPC

(43) Date of publication:
**20.03.2024 Bulletin 2024/12**

(21) Application number: **21947483.0**

(22) Date of filing: **29.06.2021**

(51) International Patent Classification (IPC):
*H02P 21/14* (2016.01)    *H02P 21/20* (2016.01)
*H02P 21/22* (2016.01)    *F04D 13/06* (2006.01)
*F04D 15/00* (2006.01)    *F04D 29/58* (2006.01)

(86) International application number:
**PCT/CN2021/103273**

(87) International publication number:
**WO 2023/272527 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Digital Power Technologies
Co., Ltd.**
**Shenzhen, Guangdong 518043 (CN)**

(72) Inventors:
• **SHI, Chaojie**
**Shenzhen, Guangdong 518129 (CN)**
• **EERHEMU, Bayaer**
**Shenzhen, Guangdong 518129 (CN)**
• **WU, Chaoqiang**
**Shenzhen, Guangdong 518129 (CN)**
• **WANG, Shaohua**
**Shenzhen, Guangdong 518129 (CN)**
• **XIE, Xiaowei**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **HEATING CONTROL METHOD AND APPARATUS, OIL PUMP MOTOR, AND HEAT EXCHANGE SYSTEM**

(57) Embodiments of this application provide a heating control method and apparatus, an oil pump, and a heat exchange system. The method includes: in a cold state, injecting a heating current into an oil pump motor, where when the oil pump motor is not started, a torque that the heating current is capable of generating is zero, and after the oil pump motor is started, heating power of the heating current is greater than heating power of an energy-saving current, where the energy-saving current is a current capable of enabling a first motor to reach a target operating condition when oil temperature is greater than a preset temperature threshold.

FIG. 1

**Description**

**TECHNICAL FIELD**

This application relates to the field of control technologies, and in particular, to a heating control method and apparatus, an oil pump motor, and a heat exchange system.

**BACKGROUND**

When temperature in an operating environment of a motor is low, because viscosity of oil in the motor is high in a low-temperature condition, a flow rate of the oil in the motor is quite low, and the motor cannot operate normally.

Currently, a technical solution for quickly heating oil in a motor is urgently needed.

**SUMMARY**

This application provides a heating control method and a related apparatus, to quickly heat oil in an adjacent area of a motor.

According to a first aspect, an embodiment of this application provides a heating control method. The method includes:

injecting a heating current into a first motor when a cold-state condition is met, where
the first motor is an oil pump motor in an oil pump, and the heating current meets the following control objective: when the first motor is in a non-started state, the heating current is a zero-torque current, and a torque that the zero-torque current is capable of generating is zero; and/or when the first motor is in a started state, the heating current is a heat-boosting current, and heating power of the heat-boosting current is greater than heating power of an energy-saving current, where the energy-saving current is a current capable of enabling the first motor to reach a target operating condition when oil temperature is greater than a preset temperature threshold.

In this manner, oil in an adjacent area of the first motor can be quickly heated through self-heating of the first motor, so that the first motor can enter a high-speed rotation state as early as possible.

In a possible implementation, the cold-state condition includes:

temperature in the adjacent area of the first motor is less than the preset temperature threshold; or
a rotational speed of the first motor that operates based on the energy-saving current is less than a preset rotational speed threshold, where the preset rotational speed threshold is a target rotational speed in the target operating condition.

In a possible implementation, the cold-state condition includes:

an operating condition of the first motor is a low-loss condition, where heating power loss in the low-loss condition is less than an expected heating power loss threshold; or
heating power loss corresponding to an operating condition of the first motor is less than the expected heating power loss threshold, where
the expected heating power loss is used to enable the first motor to increase the oil temperature to the preset temperature threshold within preset time.

In a possible implementation, the method further includes:
injecting the energy-saving current into the first motor when the cold-state condition is not met.

In a possible implementation, the energy-saving current is a current that enables the first motor to reach the target operating condition and that meets a small-amplitude condition, or the energy-saving current is a current that enables the first motor to reach the target operating condition and that meets a mechanical energy conversion efficiency condition of an entire system.

In a possible implementation, the heat-boosting current is a first heat-boosting current or a second heat-boosting current;

total power of the first heat-boosting current is equal to total power of the energy-saving current, and a proportion of heating power of the first heat-boosting current to the total power of the first heat-boosting current is greater than a proportion of the heating power of the energy-saving current to the total power of the energy-saving current; and

a proportion of heating power of the second heat-boosting current to total power of the second heat-boosting current is equal to a proportion of the heating power of the second heat-boosting current to the total power of the second heat-boosting current, and the total power of the second heat-boosting current is greater than the total power of the energy-saving current.

In a possible implementation, the heat-boosting current is a first heat-boosting current or a second heat-boosting current;

an amplitude of an integrated vector current corresponding to the first heat-boosting current in a dq rotating coordinate system is equal to an amplitude of an integrated vector current corresponding to the energy-saving current, and a torque that the second heat-boosting current is capable of generating is less than a torque that the energy-saving current is capable of generating; and

a torque that the first heat-boosting current is capable of generating is equal to the torque that the energy-saving current is capable of generating, and an amplitude of an integrated vector current corresponding to the first heat-boosting current in the dq rotating coordinate system is greater than the amplitude of the integrated vector current corresponding to the energy-saving current.

In a possible implementation, the injecting a heating current into a first motor when a cold-state condition is met includes:

injecting the first heat-boosting current into the first motor when the first motor is in a stalled state, where when the first motor is in the stalled state, the first motor is in the started state, and a rotational speed that the first motor is capable of reaching based on the energy-saving current is less than or equal to a cold-state rotational speed threshold, where the cold-state rotational speed threshold is 0 or a rotational speed that the first motor is capable of reaching when the oil temperature is equal to a cold-state temperature threshold, and the cold-state temperature threshold is less than or equal to the preset temperature threshold.

In a possible implementation, the injecting a heating current into a first motor when a cold-state condition is met includes:

injecting the second heat-boosting current into the first motor when the first motor is in a low-speed state, where when the first motor is in the low-speed state, the first motor is in the started state, and a rotational speed that the first motor is capable of reaching based on the energy-saving current is less than a high-speed-state rotational speed threshold, where the high-speed-state rotational speed threshold is a rotational speed that the first motor is capable of reaching when the oil temperature is greater than or equal to a high-speed-state temperature threshold, and the high-speed-state temperature threshold is greater than the cold-state temperature threshold.

In a possible implementation, the first motor is an SPM motor or an IPM motor; and a direct-axis current of the integrated vector current corresponding to the first heat-boosting current in the dq rotating coordinate system is not 0, and a quadrature-axis current is 0.
In a possible implementation, the first motor is the SPM motor;

an integrated vector current corresponding to the second heat-boosting current in the dq rotating coordinate system is a second vector current, and an integrated vector current corresponding to the energy-saving current in the dq rotating coordinate system is an energy-saving vector current; and
a direct-axis current of the second vector current is equal to a direct-axis current of the energy-saving vector current, and an amplitude of the second vector current is equal to a maximum amplitude supported by the first motor.

In a possible implementation, the first motor is the IPM motor;

an integrated vector current corresponding to the second heat-boosting current in the dq rotating coordinate system is a second vector current, and an integrated vector current corresponding to the energy-saving current in the dq rotating coordinate system is an energy-saving vector current;
the energy-saving vector current is a vector current that is capable of generating a target torque and that has a smallest amplitude; and
the second vector current is a vector current that is capable of generating the target torque and that has an amplitude greater than the amplitude of the energy-saving vector current, where

the amplitude of the second vector current is less than or equal to a maximum amplitude supported by the first motor.

In a possible implementation, the integrated vector current corresponding to the first heat-boosting current in the dq rotating coordinate system is a first vector current, and the first vector current meets the following control objective:

an included angle between the first vector current and a d-axis is 0, and a through-current mode of the zero-torque vector current is an alternating-current mode, where
the alternating-current mode indicates that an amplitude of the first vector current changes with time.

In a possible implementation, in the dq rotating coordinate system, the integrated vector current corresponding to the second heat-boosting current in the dq rotating coordinate system is the second vector current, and the second vector current meets any one of the following control objectives:

a through-current mode of the second vector current is a direct-current mode, and an included angle between the second vector current and a d-axis changes with time; or
a through-current mode of the second vector current is an alternating-current mode, where
the direct-current mode indicates that an amplitude of the second vector current does not change with time, and the alternating-current mode indicates that an amplitude of the second vector current changes with time.

In a possible implementation, an integrated vector current corresponding to the zero-torque current in the dq rotating coordinate system is a zero-torque vector current, and the zero-torque vector current meets the following control objective:

an included angle between the zero-torque vector current and the d-axis is 0, and a through-current mode of the zero-torque vector current is an alternating-current mode, where
the alternating-current mode indicates that an amplitude of the zero-torque vector current changes with time.

In a possible implementation, the first motor includes a motor cavity connected to an oil pipe, the motor cavity is configured to accommodate a stator and a rotor of the first motor, and an air gap between the stator and the rotor of the first motor is connected to the oil pipe; and
when the oil pump motor operates, the motor cavity is filled with oil, and the rotor is in contact with the oil in the motor cavity.
In a possible implementation, an integrated vector current corresponding to the heating current in the dq coordinate system may meet any one of the following control objectives:

a through-current mode is a direct-current mode, and an included angle between the d-axis and the integrated vector current corresponding to the heating current changes with time; or
a through-current mode is an alternating-current mode without a direct-current bias; or
a through-current mode is an alternating-current mode with a direct-current bias.

In a possible implementation, before the injecting a heating current into a first motor, the method includes:

obtaining a startup indication for a second motor, where the second motor is an oil-cooled motor, and the first motor is configured to drive cooling oil to flow to the second motor through the oil pipe; and
after the obtaining a startup indication for a second motor, the method further includes:

starting the second motor; and
controlling the second motor to operate in a low-loss mode, where
heating power loss of the second motor in an operating condition when the second motor operates in the low-loss mode is less than a cold-state heat dissipation power threshold, the cold-state heat dissipation power threshold is determined based on the cold-state rotational speed threshold, the cold-state rotational speed threshold is a rotational speed that the first motor is capable of reaching when the oil temperature reaches the cold-state temperature threshold, and the cold-state rotational speed threshold is less than or equal to the preset temperature threshold.

In a possible implementation, the method further includes:

when a rotational speed of the first motor is greater than or equal to a high-flow-rate rotational speed threshold, controlling the second motor to operate in a high-loss mode, where

heating power loss of the second motor in an operating condition when the second motor operates in the high-loss mode is greater than a high-speed-state heat dissipation power threshold, the high-speed-state heat dissipation power threshold is determined based on the high-speed-state rotational speed threshold, and the high-speed-state rotational speed threshold is a rotational speed that the first motor is capable of reaching when the oil temperature reaches the high-speed-state temperature threshold.

In a possible implementation, the second motor is a drive motor that drives a wheel in an electric vehicle to rotate, the electric vehicle further includes a heat collection apparatus, the heat collection apparatus is a battery or a cockpit heating apparatus, the heat collection apparatus and the oil pipe form a heat exchange connection through a heat exchanger, and the heat exchanger is located on the oil pipe through which the cooling oil flows from the second motor to the first motor; and
before the obtaining a startup control indication for a second motor, the method further includes:
obtaining a startup indication for the heat collection apparatus.
According to a second aspect, an embodiment of this application provides a heating control method, including:

injecting a heat-boosting current into a first motor when a rotational speed of the first motor that operates based on an energy-saving current is less than a target rotational speed in a target operating condition, where
the first motor is an oil pump motor in an oil pump, heating power of the heat-boosting current is greater than heating power of the energy-saving current, and the energy-saving current is a current capable of enabling the first motor to reach the target operating condition when oil temperature is greater than a preset temperature threshold.

In a possible implementation, the method further includes:
injecting the energy-saving current into the first motor when a rotational speed of the first motor that operates based on the heat-boosting current is greater than or equal to the target rotational speed.
According to a third aspect, an embodiment of this application provides a heating control method, including:

injecting a heat-boosting current into a first motor when the first motor meets a low-loss condition, where
the first motor is an oil pump motor in an oil pump, and the low-loss condition includes: heating power loss corresponding to an operating condition of the first motor is less than an expected heating power loss threshold, or an operating condition of the first motor is the low-loss condition, where heating power loss in the low-loss condition is less than the expected heating power loss threshold, heating power of the heat-boosting current is greater than heating power of an energy-saving current, and the energy-saving current is a current capable of enabling the first motor to reach a target operating condition when oil temperature is greater than a preset temperature threshold.

According to another aspect, an embodiment of this application provides an oil pump, including a first motor and a control apparatus. The control apparatus is configured to perform the method according to any one of the first aspect to the third aspect.
According to another aspect, an embodiment of this application provides a heat exchange system, including a first motor, a control apparatus, a second motor, an oil pipe, a heat exchanger, and a heat collection apparatus.
The second motor is an oil-cooled motor. The first motor is an oil pump motor in an oil pump. The oil pump is configured to provide cooling oil for the second motor through the oil pipe.
The heat exchanger is located on the oil pipe through which the cooling oil flows from the second motor to the first motor. The heat collection apparatus and the oil pipe form a heat exchange connection through the heat exchanger.
The control apparatus is configured to perform the method according to any one of the first aspect to the third aspect.
In a possible implementation, the heat collection apparatus is a battery or a cockpit heating apparatus.
According to another aspect, an embodiment of this application provides a control apparatus, including a memory and a processor.
The memory is configured to store instructions. The processor is configured to execute the instructions to implement the method according to any one of the first aspect to the third aspect.
According to another aspect, an embodiment of this application provides a control apparatus. The apparatus includes a processing module and a transceiver module. The processing unit executes instructions to control the apparatus to perform the method in any one of the possible designs of the first aspect to the third aspect.
In a possible implementation, the apparatus may further include a storage module.
In a possible implementation, the apparatus may be a controller, or may be a chip in a controller.
When the apparatus is the controller, the processing module may be a processor, and the transceiver module may be a transceiver. If the storage module is further included, the storage module may be a memory.
When the apparatus is the chip in the controller, the processing module may be a processor, and the transceiver module may be an input/output interface, a pin, a circuit, or the like. If the storage module is further included, the storage module may be an internal storage module (for example, a register or a cache) of the chip, or may be an external storage module (for example, a read-only memory or a random access memory) of the chip.

Any aforementioned processor may be a general-purpose central processing unit (Central Processing Unit, CPU for short), a microprocessor, an application-specific integrated circuit (application-specific integrated circuit, ASIC for short), or one or more integrated circuits for controlling program execution for the spatial multiplexing methods in the foregoing aspects.

In an example, the controller may be a control center of an electric vehicle.

According to another aspect, this application provides a computer-readable storage medium. The computer-readable storage medium stores instructions, and the instructions may be executed by one or more processors in a processing circuit. When the instructions run on a computer, the computer is enabled to perform the method in any one of the possible implementations of the first aspect to the third aspect.

According to another aspect, a computer program product including instructions is provided. When the computer program product runs on a computer, the computer is enabled to perform the method in any one of the possible implementations of the first aspect to the third aspect.

## BRIEF DESCRIPTION OF DRAWINGS

To describe technical solutions in this application or in the conventional technology more clearly, the following briefly describes accompanying drawings for describing embodiments or the conventional technology. Clearly, the accompanying drawings in the following descriptions show some embodiments of this application, and a person of ordinary skill in the art may still derive other drawings from these accompanying drawings without creative efforts.

FIG. 1 is a first schematic diagram of a structure of a first motor according to an embodiment of this application;

FIG. 2 is a second schematic diagram of a structure of a first motor according to an embodiment of this application;

FIG. 3 is a schematic diagram of a structure of an oil pump including a first motor according to an embodiment of this application;

FIG. 4A is a first schematic diagram of a structure of an oil pump to which a heating control method according to an embodiment of this application is applied;

FIG. 4B is a schematic diagram of a structure of a heat exchange system to which a heating control method according to an embodiment of this application is applied;

FIG. 4C is a schematic diagram of another structure of a heat exchange system to which a heating control method according to an embodiment of this application is applied;

FIG. 5A is a schematic diagram of a structure of a three-phase full-bridge circuit according to an embodiment of this application;

FIG. 5B is a schematic diagram of a d-axis current vector according to an embodiment of this application;

FIG. 5C is a schematic diagram of an integrated vector current in a dq-axis rotating coordinate system according to an embodiment of this application;

FIG. 5D is a schematic diagram of an integrated vector current in a three-phase rotating coordinate system according to an embodiment of this application;

FIG. 6 is a first schematic flowchart of a heating control method according to an embodiment of this application;

FIG. 7 is a second schematic flowchart of a heating control method according to an embodiment of this application;

FIG. 8 is a schematic diagram of a heat-boosting-mode current applied to an SPM motor according to an embodiment of this application;

FIG. 9 is a schematic diagram of a heat-boosting-mode current determined based on a Min-TPA mode according to an embodiment of this application;

FIG. 10 is a schematic diagram of a mapping relationship between an external characteristic curve corresponding to an operating condition of a first motor and corresponding heating power loss according to an embodiment of this application;

FIG. 11 is a third schematic flowchart of a heating control method according to an embodiment of this application;

FIG. 12 is a first schematic diagram of a structure of a control apparatus according to an embodiment of this application; and

FIG. 13 is a second schematic diagram of a structure of a control apparatus according to an embodiment of this application.

## DESCRIPTION OF EMBODIMENTS

Terms used in embodiments of this application are only used to explain specific embodiments of this application, but are not intended to limit this application.

**Embodiment 1**

Embodiments of this application provide a heating control method and apparatus, and a first motor and a heat exchange system to which the heating control method is applied. A channel allowing liquid to pass may be provided in an adjacent area of the first motor.

For example, the first motor may be an oil pump motor or an oil-cooled motor, and liquid used with the first motor may be oil.

In an example, the oil pump motor may be an electric pump or a motor that is in an oil pump and that is configured to drive liquid to flow. The oil pump may be provided with an oil pump cavity for accommodating to-be-driven oil, and the oil pump motor may drive the oil in the oil pump cavity through a driving connector such as a fan blade.

In an example, the oil-cooled motor may be a motor cooled by using cooling oil. A channel allowing oil to pass may be provided in the oil-cooled motor, or the oil-cooled motor may be located in a cooling cavity that accommodates cooling oil. Oil flowing through the internal channel of the oil-cooled motor or oil flowing through the cooling cavity outside the oil-cooled motor can take away heat generated during operating of the oil-cooled motor.

It should be noted that the oil pump motor may be cooled in an oil-cooled manner or another cooling manner. When the oil pump motor is cooled in the oil-cooled manner, a channel allowing oil to pass may also be provided in the oil pump motor, or the oil pump motor may also be disposed in a cooling cavity. The oil pump motor disposed in this manner is also an oil-cooled motor. In embodiments of this application, allowing oil to pass in specific space may be referred to as oil passing, and a channel or a space area that allows oil to pass may be referred to as an oil passing channel or an oil passing area.

In an example, the oil used with the first motor may be cooling oil, lubricating oil, insulating oil, or high-pressure-resistant oil.

In some low-temperature scenarios, the first motor cannot operate normally due to high viscosity of the oil. For example, for the oil pump motor, when oil temperature in the oil pump cavity is low, a torque output by the oil pump motor after startup cannot push the oil to move, and the oil pump motor even cannot rotate. For the oil-cooled motor, when oil temperature in an internal or external adjacent area of the oil-cooled motor is low, a flow capability of the oil is degraded to a quite low level. As a result, heat generated by the oil-cooled motor cannot be taken away in a timely manner, and the motor may be burnt.

In the heating control method in embodiments of this application, the first motor may be used to heat oil in an adjacent area of the first motor, to resolve the foregoing problem.

In embodiments of this application, the adjacent area of the first motor may include an oil passing area inside the first motor and an oil passing area outside the first motor. In other embodiments of this application, detailed descriptions are provided with reference to a structure and a position of the first motor.

The following describes example structures of the first motor in embodiments of this application.

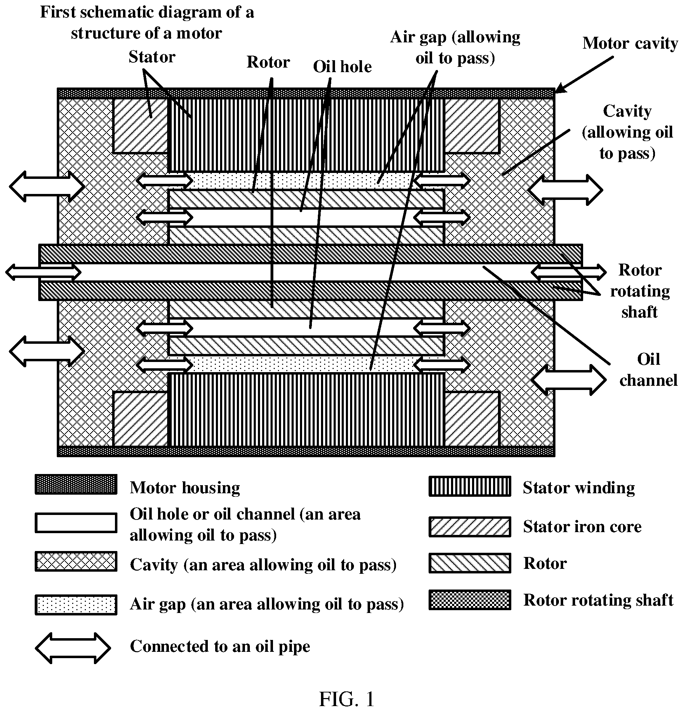

FIG. 1 is a first schematic diagram of a structure of a first motor according to an embodiment of this application.

As shown in FIG. 1, the first motor may include a stator, a rotor, and a motor housing. The motor housing surrounds a motor cavity, and the motor cavity may be configured to accommodate the stator and the rotor. In an example, the stator may include a stator iron core and a stator winding, and the rotor may rotate around a rotor rotating shaft disposed in the motor cavity. In an example, a quantity of rotors may be 3. This is not limited in this embodiment of this application.

In this embodiment of this application, as shown in FIG. 1, one or more oil passing areas that allow oil to pass may be provided inside the first motor.

In an optional implementation, an oil channel allowing oil to pass may be provided in the rotor rotating shaft. The oil channel may be connected to an oil pipe located outside the first motor. It should be noted that the oil channel may be connected to the oil pipe without passing through a cavity in the motor cavity.

In an optional implementation, an oil hole allowing oil to pass may be provided in the rotor. The oil hole may be connected to the oil pipe. It should be noted that the oil hole may be connected to the oil pipe without passing through the cavity in the motor cavity.

In an optional implementation, the motor cavity may be connected to the oil pipe. In an example, a cavity part shown in FIG. 1 may be an area that is in the motor cavity and that allows oil to pass. It should be noted that, when the motor cavity is connected to the oil pipe, the oil channel and the oil hole may alternatively be connected to the oil pipe through the motor cavity.

In this arrangement manner, when oil passes through the oil pipe, the oil may also pass through the motor cavity, and the rotor located in the motor cavity may be immersed in the oil, so that the rotor can be in direct contact with the oil and a heat transfer surface between the rotor and the oil is larger. When the oil is heated through heating by the first motor, efficiency of heating the oil by the first motor can be improved.

In an optional implementation, a gap between the rotor and the stator winding may be referred to as an air gap, and the air gap between the rotor and the stator winding may be connected to the oil pipe. In an example, the air gap may be connected to the motor cavity, and connected to the oil pipe through the motor cavity.

In this arrangement manner, when oil exists in the motor cavity, the oil may also pass through the air gap, so that a heat transfer surface between the heating rotor and the oil is larger, heat transfer is performed more directly, and efficiency of heating the oil by the first motor can be improved.

In this embodiment of this application, in an optional implementation, when the first motor is an oil pump motor, the motor cavity may be connected to the oil pipe, and the air gap may be connected to the oil pipe. When the first motor is a non-oil-pump motor that is mainly configured to output mechanical energy, for example, a drive motor that is in an electric vehicle and that is cooled in an oil-cooled manner, neither the motor cavity nor the air gap may be connected to the oil pipe. In this arrangement manner, a proportion of electric energy, converted into thermal energy, of a current injected when an oil-cooled motor is in a rotation state can be controlled.

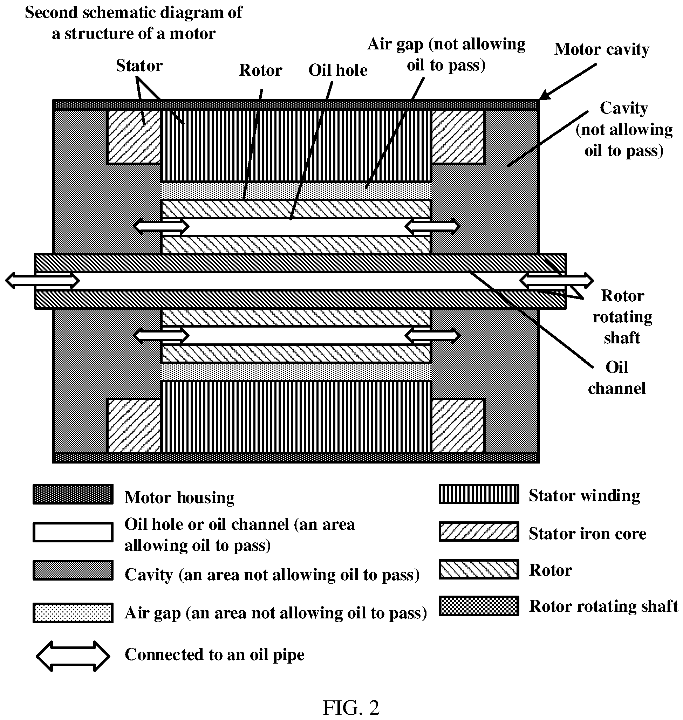

FIG. 2 is a second schematic diagram of a structure of a first motor according to an embodiment of this application.

A difference from the structure shown in FIG. 1 lies in that, in an example, a cavity and an air gap between a stator and a rotor in FIG. 2 may not be connected to an oil pipe. In this arrangement manner, the air gap does not allow oil to pass. In a manner in which an air gap is provided in a drive motor as an area that does not allow oil to pass, a proportion of electric energy converted into thermal energy can be reduced, so that heating loss is reduced, and more electric energy is converted into mechanical potential energy.

In embodiments of this application, the oil passing area outside the first motor may be provided in the following implementations. An example in which the first motor is an oil pump motor in an oil pump is used below for description.

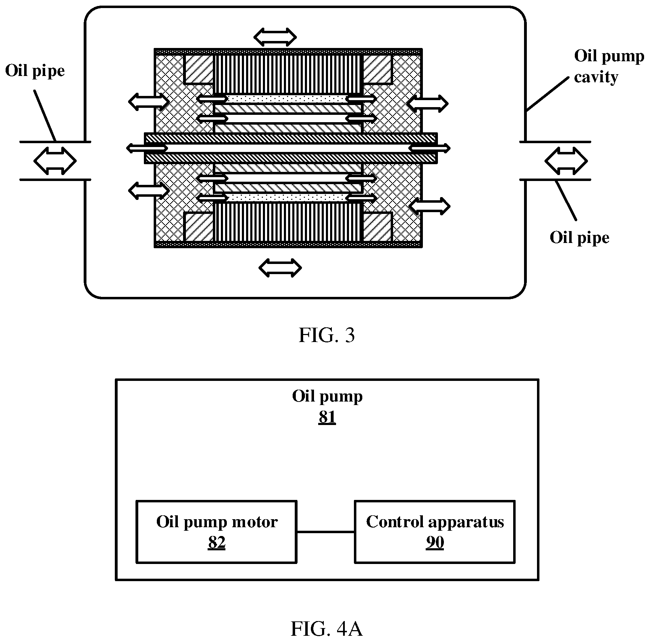

FIG. 3 is a schematic diagram of a structure of an oil pump including a first motor according to an embodiment of this application.

As shown in FIG. 3, in an example, the oil pump may include components such as an oil pump cavity and a fan blade (not shown in the figure). An oil pump motor may be located in the oil pump cavity of the oil pump, and a liquid inlet and a liquid outlet of the oil pump cavity may be separately connected to an oil pipe. In this case, an outer side of a motor housing of the first motor may be in contact with oil in the oil pump cavity. The first motor may be configured to heat oil inside the first motor, and oil outside the first motor but inside the oil pump cavity. That is, oil in an adjacent area of the oil pump motor may include the oil inside the oil pump cavity. In another embodiment of this application, an oil-cooled motor may alternatively be disposed in a cooling cavity that allows oil to pass, that is, oil in an adjacent area of the oil-cooled motor may include oil inside the cooling cavity.

It should be noted that the first motor to which the heating control method provided in embodiments of this application is applied may include at least one of the foregoing internal oil passing areas or the foregoing external oil passing areas.

In embodiments of this application, the heating control method may be performed by a control apparatus. The control apparatus may be disposed in a plurality of manners.

In an example, the control apparatus may be disposed in the first motor. For example, when the first motor is an oil pump motor or a drive motor, the control apparatus may be a control unit in the oil pump motor or the drive motor, and the control unit may be implemented by using software or hardware.

In another example, when the first motor is an oil pump motor in an oil pump, the control apparatus may be disposed in the oil pump.

FIG. 4A is a schematic diagram of a structure of an oil pump to which a heating control method according to an embodiment of this application is applied. In an example, as shown in FIG. 4A, the oil pump 81 may include an oil pump motor 82 and a control apparatus 90.

In still another example, the first motor may be an oil pump motor in an oil pump, the oil pump is an oil pump that is in a heat exchange system and that is configured to drive oil in a heat transfer oil channel, and the control apparatus may be located in the heat exchange system.

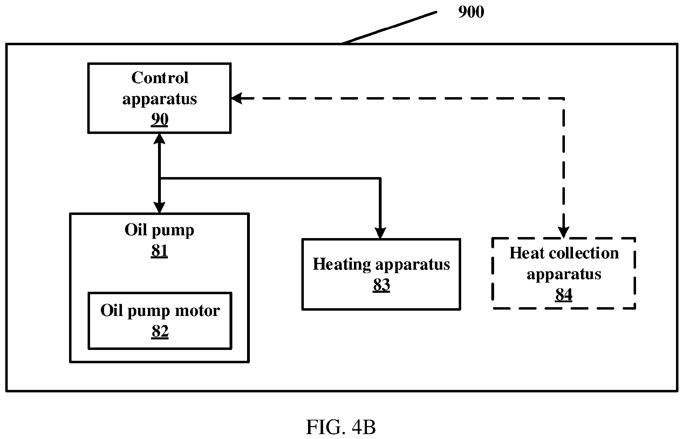

FIG. 4B is a schematic diagram of a structure of a heat exchange system to which a heating control method according to an embodiment of this application is applied. As shown in FIG. 4B, in an example, the heat exchange system 900 may include a control apparatus 90, a heating apparatus 83, an oil pump 81 including an oil pump motor 82, a heat collection apparatus 84, and an oil pipe. The oil pipe is not shown in FIG. 4B. In an example, the oil pipe may be configured to sequentially connect the oil pump, the heating apparatus, and the heat collection apparatus into a circulation loop.

In actual application, for example, the heat exchange system may be an electric vehicle or located on an electric vehicle.

In an example, the heating apparatus may be a drive motor that is in the electric vehicle and that drives a wheel to rotate, or may be another electrical device that can generate heat in the electric vehicle.

In an example, the heat collection apparatus may include an apparatus that needs to collect and utilize thermal energy, such as a battery or a cockpit heating apparatus in the electric vehicle. For example, the battery may be configured to supply power to the drive motor that drives the wheel to rotate and the electrical device in the electric vehicle. The battery may also be referred to as a battery pack. In an example, the cockpit heating apparatus may be a vehicle-mounted air conditioner. In actual application, a temperature sensor may be further disposed in the battery pack or the cockpit heating apparatus.

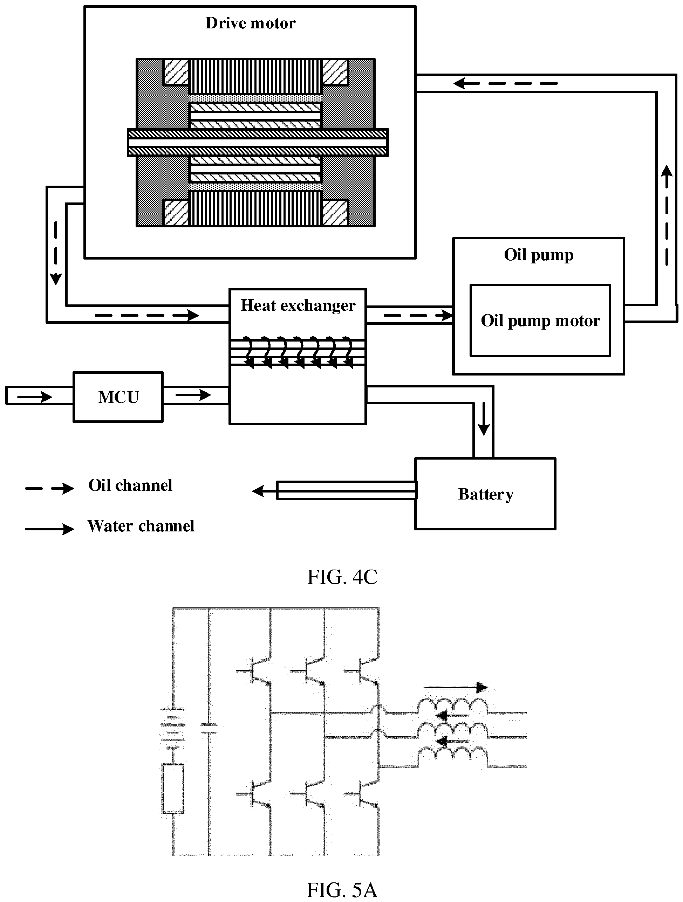

For example, the heating apparatus in the heat exchange system may be a drive motor, and the heat collection apparatus in the heat exchange system includes a battery. FIG. 4C is a schematic diagram of another structure of a heat exchange system to which a heating control method according to an embodiment of this application is applied.

As shown in FIG. 4C, the heat exchange system may include devices disposed in two circulating heat conduction loops. Devices located in an oil channel include a drive motor, a heat exchanger, and an oil pump that are sequentially connected through an oil pipe. Devices located in a water channel (only a part of the water channel is shown in the figure) include a micro controller unit MCU, a heat exchanger, and a battery that are sequentially connected through a water pipe. The heat exchanger is configured to transfer heat of oil in the oil channel to water in the water channel.

It should be noted that a control apparatus may be located on in oil pump motor, or a control apparatus may be located in the drive motor, or a control apparatus may be located in a control center of an electric vehicle. The control apparatus may be electrically connected to the oil pump motor or the drive motor. A position of the control apparatus is not shown in FIG. 4C.

In an optional implementation of the heat exchange system, in an example, a heat collection apparatus may include a heat exchanger, a heat exchange loop, and a battery. The battery is located in the heat exchange loop, and the heat exchanger is also located in the heat exchange loop. In an example, the heat exchanger may be an oil-water heat exchanger, and the oil-water heat exchanger may be a passive device. In an example, the heat exchange loop may be the water pipe corresponding to the water channel in FIG. 4C.

In an optional implementation of the heat exchange system, in an example, the heat exchange system may further include one or more temperature sensors.

In an example, the temperature sensor may be located in an adjacent area of a first motor, and is configured to obtain temperature of oil in an adjacent area of the oil pump motor. In an example, the temperature sensor may be located in an adjacent area of the drive motor or in the oil pipe, and is configured to obtain temperature of oil in the adjacent area of the drive motor or in the oil pipe. The control apparatus may perform corresponding control by using various temperature data obtained by the sensor. In other embodiments of this application, control steps in a heat exchange system control scenario are described in detail.

In embodiments of this application, the first motor to which the heating control method is applied may alternatively be a motor with a built-in permanent magnet.

In an example, the rotor in the first motor may be made of a permanent magnet. In an example, the first motor may be a surface-mounted permanent magnet machine (Surface-Mounted Permanent Magnet Machine, SPM), and the SPM motor is a permanent magnet motor in which a permanent magnet is fastened on a surface of a rotor. In another example, the first motor may be an interior permanent magnet machine (Interior Permanent Magnet Machine, IPM), and the IPM motor may be a permanent magnet motor in which a permanent magnet is embedded in a rotor.

The first motor with a built-in permanent magnet can stimulate more heating loss when a heating current is injected. In other embodiments of this application, a heating current injected into the motor with a built-in permanent magnet and heating currents injected into the SPM motor and the IPM motor are described in detail.

In this embodiment of this application, the first motor may include a three-phase circuit, and the three-phase circuit is configured to inject a three-phase current into three rotors.

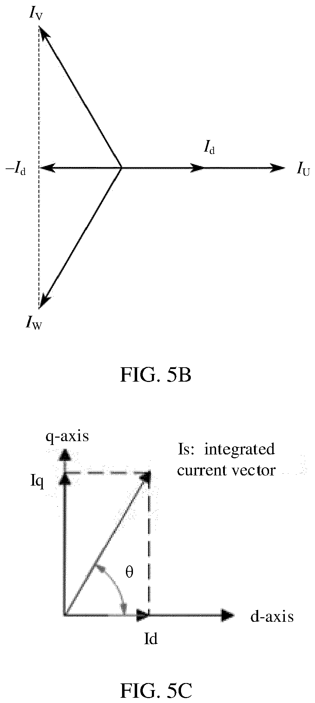

For example, the first motor includes three rotors. In the heating control method in embodiments of this application, various heating currents injected into the first motor may be a three-phase current injected into the first motor through a three-phase circuit. For example, the three-phase circuit may be a three-phase full-bridge circuit, a three-phase half-bridge circuit, or a three-phase series-parallel circuit. FIG. 5A shows an example of a three-phase full-bridge circuit, and FIG. 5B shows an example of a d-axis current vector. This is not limited in embodiments of this application.

It should be noted that the three-phase current may also be referred to as three-phase electricity. The three-phase electricity may be a group of three-phase alternating currents with equal amplitudes, equal frequencies, and a phase difference of 120°. In a stationary three-phase coordinate system, a three-phase current may be denoted as $i_a$, $i_b$, and $i_c$ (or $i_u$, $i_v$, and $i_w$). Control objectives of various currents in the heating control method in embodiments of this application may be replaced with control objectives of integrated vector currents equivalent to the various currents. During motor analysis, the three-phase current in the stationary three-phase coordinate system may be converted into an integrated vector current in a rotating coordinate system through Park transformation (Park Transformation), to simplify the motor analysis.

For example, the rotating coordinate system may be a dq rotating coordinate system, and a d-axis in the dq rotating coordinate system is the same as an a-axis in which $i_a$ is located (or a u-axis in which $i_u$ is located) in the three-phase coordinate system. FIG. 5C is a schematic diagram of an integrated vector current in a dq rotating coordinate system according to an embodiment of this application. As shown in FIG. 5C, an integrated vector current *Is* corresponding to a three-phase current in the dq rotating coordinate system may be expressed as a resultant vector determined based on a direct-axis (direct axis or d-axis) current *Id* and a quadrature-axis (quadrature axis or q-axis, q-axis) current *Iq*. The integrated vector current *Is* may also be expressed by using an amplitude and a position angle θ, where the position angle θ is an included angle between the integrated vector current *Is* and a d-axis. The integrated vector current *Is* may also be expressed by using the quadrature-axis current *Iq* and a current leading angle γ. The current leading angle γ is an included angle between the integrated current vector Is and a quadrature-axis q-axis.

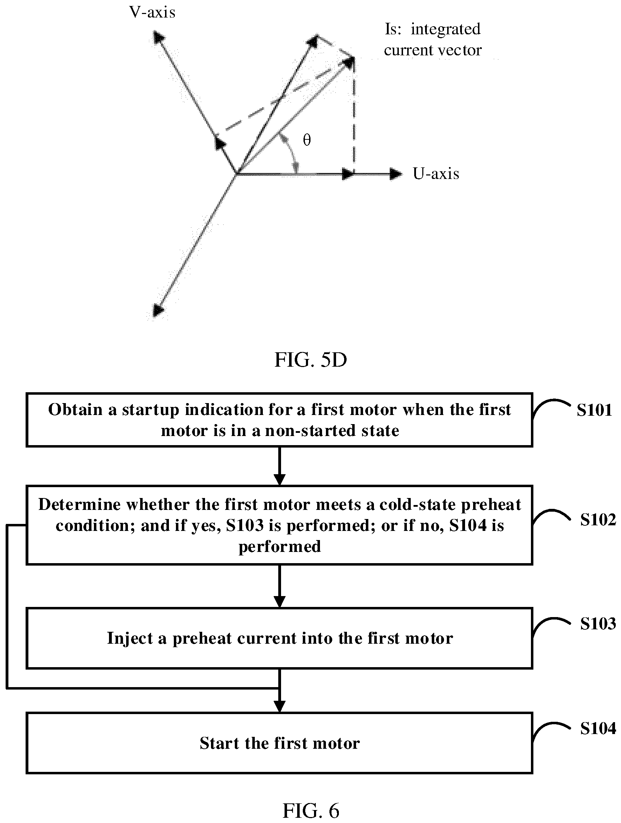

In another example, the rotating coordinate system may alternatively be a three-phase rotating coordinate system. FIG. 5D is a schematic diagram of an integrated vector current in a three-phase rotating coordinate system according to an embodiment of this application.

In actual application, an integrated current vector is also referred to as an integrated vector current. The integrated vector current may be adjusted by adjusting a magnitude of a direct-axis current, a magnitude of a quadrature-axis current, a magnitude of a position angle θ, and the like. In the following embodiments, various heating currents injected into the first motor in the heating control method are described in detail.

The following describes the heating control method provided in embodiments of this application by using examples.

Based on any one of the first motors provided in the foregoing embodiments, embodiments of this application provide a heating control method. A control apparatus may inject a heating current into the first motor, to stimulate the first motor to generate heat to heat oil in an adjacent area of the first motor.

In actual application, temperature of the first motor before startup is close to temperature in an operating environment of the first motor. After the first motor is started, an operating current is injected into the first motor, to reach a target operating condition. During operating of the first motor, the first motor generates heat, and some electric energy is converted into thermal energy, so that temperature of the first motor and temperature in the adjacent area gradually increase.

In embodiments of this application, the control apparatus may first determine whether the first motor reaches a cold-state condition, and inject a heating current into the first motor when determining that the first motor needs to be heated. The cold-state condition may be set based on decision information such as temperature in the adjacent area of the first motor, oil temperature in the adjacent area of the first motor, and a rotational speed of the first motor.

It should be noted that an oil flow rate is related to the oil temperature. When the first motor is an oil pump motor, the oil flow rate is related to the rotational speed of the first motor. Table 1 shows examples of the oil temperature and the oil flow rate.

**Table 1**

| Mobility status of the oil or the first motor | Stalled state | Low-speed state | High-speed state |
|---|---|---|---|
| Oil flow rate | Sp ≤ Stalled-state flow rate threshold | Stalled-state flow rate threshold < Sp < High-speed-state flow rate threshold | Sp ≥ High-speed-state flow rate threshold |
| Example flow rate | Sp ≤ 0.1 m/s | 0.1 m/s < Sp < 1 m/s | Sp ≥ 1 m/s |
| Oil temperature, or temperature in the adjacent area of the first motor | Temp ≤ Cold-state temperature threshold | Cold-state temperature threshold < Temp < High-speed-state temperature threshold | Temp ≥ High-speed-state temperature threshold |
| Example temperature | Temp ≤ -30°C | -30°C < Temp < 10°C | Temp ≥ 10°C |
| Rotational speed that the first motor can reach | Sp ≤ Stalled-state rotational speed threshold | Stalled-state rotational speed threshold < Sp < High-speed-state rotational speed threshold | Sp ≥ High-speed-state rotational speed threshold |
| Example rotational speed | RPM ≤ 200 r/s | 200 r/s < RPM < 2000 r/s | RPM ≥ 2000 r/s |
| Whether heating is required | Heating is required. | Heating is required. | Heating is not required. |
| Heating condition | Cold-state preheat condition/Stalled-state heat boosting condition | Low-speed-state heat boosting condition | N/A |

There is a linear relationship between the oil temperature, the oil flow rate, and the rotational speed of the first motor. When the oil temperature reaches the high-speed-state temperature threshold, the oil flow rate may reach the high-speed-state flow rate threshold, and the rotational speed that the first motor can reach reaches the high-speed-state rotational speed threshold. When the oil temperature decreases to the cold-state temperature threshold, the oil flow rate decreases to the stalled-state flow rate threshold. The stalled-state flow rate threshold may be, for example, 0 or a small value. The stalled-state rotational speed threshold may be 0 or a small value. When the oil temperature rises from the cold-state temperature threshold to the high-speed-state temperature threshold, the oil flow rate may rise from the stalled-state flow rate threshold to the high-speed-state flow rate threshold, and the rotational speed of the first motor may gradually rise from the stalled-state rotational speed threshold to the high-speed-state rotational speed threshold. In an example, the cold-state temperature threshold may be temperature at which viscosity of oil reaches a preset viscosity threshold. When the viscosity of the oil reaches the preset viscosity threshold, a speed at which oil in the adjacent area of the first motor moves under pushing by a starting torque of the first motor is less than or equal to a preset low-speed-state flow rate threshold. In an example, the preset low-speed-state flow rate threshold may be 0. When the oil temperature is less than the cold-state temperature threshold, the viscosity of the oil may reach a quite high level. Because the viscosity is excessively high, a torque generated during startup of the first motor even cannot push the oil.

Based on Table 1, the control apparatus may determine that the cold-state condition is met when the oil temperature does not reach the high-speed-state temperature threshold, the oil flow rate does not reach the high-speed-state flow rate threshold, or the rotational speed of the first motor does not reach the high-speed-state rotational speed threshold. It should be noted that, when whether the temperature in the operating environment of the first motor is less than the high-speed-state temperature threshold is determined based on the rotational speed of the first motor, a temperature sensor may not need to be disposed in the adjacent area of the first motor, for example, in an oil pipe or an oil pump cavity.

In embodiments of this application, the control apparatus may further set different cold-state conditions before or after the first motor is started, and set corresponding implementations of heating currents for different cold-state conditions.

Table 2 shows examples of different cold-state conditions and corresponding heating currents and energy-saving currents.

**Table 2**

| Operating status of the first motor | | A plurality of implementations of the cold-state condition | Decision information of the cold-state condition | | | A plurality of implementations of the heating current | Current description |
|---|---|---|---|---|---|---|---|
| | | | Decision information 1 | Decision information 2 | Decision information 3 | | |
| Whether the first motor is started | Rotatable state of the first motor | | Temperature in the adjacent area of the first motor (for example, oil temperature in an oil pump) | Flow rate of oil in the adjacent area of the first motor | Rotational speed of the first motor when the first motor is an oil pump motor | | |
| Non-started state | Stationary state | Cold-state preheat condition | Temp < - 30°C | 0 | 0 (An attempt is made to start the first motor, and the first motor is stopped when a rotational speed of the first motor is less than or equal to the cold-state rotational speed threshold.) | Preheat current $I_1$ (A corresponding integrated vector current is a first vector current $Is_1$.) | A torque may not need to be generated. |
| Started state | Stalled state | Stalled-state heat boosting condition | Temp < - 30°C | 0 | 0 | Preheat current $I_1$ (A corresponding integrated vector current is a first vector current $Is_1$.) | A torque may not need to be generated, or a generated torque is less than a torque that can be generated by the energy-saving current. |
| | Low-speed state | Low-speed-state heat boosting condition | -30°C < Temp < 10°C | 0 < Sp < 1 m/s | 0 < RPM < 50 r/s | Heat-boosting current $I_2$ (A corresponding integrated vector current is a second vector current $Is_2$.) | An amplitude of the heat-boosting current is greater than that of the energy-saving current. |
| | High-speed state | A heating condition is not met. | Temp ≥ - 30°C | Sp ≥ 1 m/s | Sp ≥ 50 r/s | Energy-saving current $I_0$ (A corresponding integrated vector current is an energy-saving vector current $Is_0$.) | A current that is used for reaching the target operating condition and that has a smallest amplitude or highest energy efficiency |

As shown in Table 2, when the first motor is in the non-started state, the cold-state condition may be the cold-state preheat condition; and when the first motor is in the started state, the cold-state condition may be the stalled-state heat boosting condition or the low-speed-state heat boosting condition.

As shown in Table 2, when the heating condition is not met, the control apparatus may not inject the heating current into the first motor, and may inject the energy-saving current into the first motor based on the target operating condition of the first motor. The energy-saving current may be a current that enables the first motor to reach a target torque and a target rotational speed and that has a smallest amplitude or highest energy efficiency, to avoid unnecessary heating loss. In the following embodiments, various optional implementations of the cold-state condition and the heating current shown in Table 2 are described in detail with reference to processing processes in actual application.

The following describes an optional implementation of a processing process of the heating control method provided in embodiments of this application. It should be noted that various optional implementations in embodiments of this application may be used separately or in combination.

FIG. 6 is a first schematic flowchart of a heating control method according to an embodiment of this application. As shown in FIG. 6, this embodiment of this application may include the following steps.

S101: Obtain a startup indication for a first motor when the first motor is in a non-started state.

S102: Determine whether the first motor meets a cold-state preheat condition. If the first motor meets the cold-state preheating condition, S103 is performed. If the first motor does not meet the cold-state preheating condition, S104 is performed.

In an example, when determining that the cold-state preheat condition is met, a control apparatus may set the first motor to enter a preheat mode; or when the cold-state preheat condition is not met, the control apparatus may directly start the first motor.

In this embodiment of this application, there are a plurality of implementations of the cold-state preheat condition. Table 3 shows an example implementation of the cold-state preheat condition.

**Table 3**

| Whether the first motor is started | Cold-state preheat condition | Decision information 1 | Decision information 2 | Decision information 3 | Decision information 4 |
|---|---|---|---|---|---|
| Not started | Determining condition | Temperature in an adjacent area of the first motor is less than or equal to -30°C. | Oil temperature in the adjacent area of the first motor is less than or equal to -30°C. | An attempt is made to start the first motor, and a rotational speed of the first motor is 0 or less than or equal to 1 r/s. | Temperature of another device in the adjacent area of the first motor is less than or equal to -30°C. |

As shown in Table 3, in an optional implementation, when the first motor is in the non-started state, the control apparatus may determine, based on temperature data obtained by a temperature sensor disposed in another device in the adjacent area of the first motor, whether the cold-state preheat condition is met.

In another embodiment of this application, in an example, the control apparatus may not inject a preheat current into the first motor when the first motor is in a stationary state and the temperature in the adjacent area of the first motor is greater than a cold-state temperature threshold.

S103: Inject a preheat current into the first motor.

In this embodiment of this application, the preheat current may be implemented in one or a combination of the following manners. Descriptions are provided below by using an example in which an integrated vector current corresponding to the preheat current $I_1$ is denoted as a first vector current $Is_1$, a direct-axis current of the first vector current is $I_{d1}$, a quadrature-axis current of the first vector current is $I_{q1}$, and $I_{MAX}$ is a maximum current amplitude supported by the first motor.

In an implementation of the preheat current, when the first motor is a motor with a built-in permanent magnet, a direction angle of the first vector current corresponding to the preheat current is a variable, and/or an amplitude of the first vector current is a variable, where the direction angle of the first vector current is an included angle between the first vector current and a d-axis in a dq rotating coordinate system.

In actual application, the control apparatus may set a through-current mode of the integrated vector current corresponding to the preheat current for implementation. Table 4 shows examples of the preheat current and a loss type of the first motor. Any through-current mode of the integrated current vector shown in Table 4 may be used for the first vector current.

**Table 4**

| Serial number | Through-current mode of the integrated current vector | Included angle between the integrated current vector and a d-axis of a rotor | Magnetic field type | Type of stimulated loss | Torque |
|---|---|---|---|---|---|
| 1 | Direct current | 0 | Constant magnetic field | Copper loss | No |
| 2 | Direct current | Non-zero fixed value | Constant magnetic field | Copper loss | Yes |
| 3 | Direct current | Changing with time | Rotating magnetic field | Copper loss, iron loss, and permanent magnet loss | Yes |
| 4 | Alternating current without a direct-current bias | 0 | Pulsating magnetic field | Copper loss, iron loss, and permanent magnet loss | No |
| 5 | Alternating current without a direct-current bias | Non-zero fixed value | Pulsating magnetic field | Copper loss, iron loss, and permanent magnet loss | Yes |
| 6 | Alternating current without a direct-current bias | Changing with time | Rotating magnetic field | Copper loss, iron loss, and permanent magnet loss | Yes |
| 7 | Alternating current with a direct-current bias | 0 | Constant magnetic field + pulsating magnetic field | Copper loss, iron loss, and permanent magnet loss | No |
| 8 | Alternating current with a direct-current bias | Non-zero fixed value | Constant magnetic field + pulsating magnetic field | Copper loss, iron loss, and permanent magnet loss | Yes |
| 9 | Alternating current with a direct-current bias | Changing with time | Rotating magnetic field | Copper loss, iron loss, and permanent magnet loss | Yes |

Through-current modes in Table 4 include the direct current, the alternating current, and the alternating current with a direct-current bias. The direct current indicates that an amplitude of the preheat current does not change with time. The alternating current indicates that an amplitude of the preheat current changes with time. The alternating current with a direct-current bias indicates that an amplitude changes with time and an average value of a current within a cycle is not zero, and may be positive or negative (or only in a positive half-axis or only in a negative half-axis). The included angle may be a phase of the integrated vector current.

Any one of the foregoing combinations of the through-current mode and the direction angle can stimulate the first motor to generate heating loss.

Types of stimulated loss in Table 4 include the copper loss, the iron loss, and the permanent magnet loss. The copper loss may be heat generated by an alternating current/direct current passing through a copper conductor, and heating power is calculated based on $I^2R$, where I is a current (a direct current, or an effective value of an alternating-current quantity) passing through the copper conductor, and R is conductor resistance. The iron loss may be loss generated by a ferromagnetic material (for example, steel or a silicon steel sheet) in an alternating magnetic field. The iron loss may include magnetic hysteresis loss, eddy current loss, additional loss, and the like. The permanent magnet loss is caused by conductivity of a permanent magnet material. In an alternating magnetic field, an eddy current is induced, and corresponding eddy current loss occurs correspondingly. A value of the permanent magnet loss may also be calculated based on $I^2R$, where I is the induced eddy current, and R is resistance of an eddy current loop.

Magnetic field types in Table 4 include the constant magnetic field, the rotating magnetic field, and the pulsating magnetic field. The pulsating magnetic field may be a magnetic field in which a direction does not change and only an amplitude periodically changes with time. The rotating magnetic field may be a magnetic field in which an amplitude may or may not change and a direction periodically changes with time on a circumference in space. The constant magnetic field may be a magnetic field in which neither an amplitude nor a direction changes with time.

In Table 4, integrated vector currents corresponding to combinations, indicated by the serial numbers 1, 4, and 7, of the through-current mode and the direction angle do not generate torques. In Table 4, integrated vector currents corresponding to combinations, indicated by the other serial numbers, of the through-current mode and the direction angle generate torques.

It should be noted that, when the first motor is in the non-started state, the integrated vector currents indicated by the serial numbers 1, 4, and 7 in Table 4 may be used as implementations of the preheat current, to prevent some electric energy from being converted into mechanical energy due to generation of a torque.

It should be further noted that, in addition to the copper loss and the iron loss, integrated vector currents corresponding to combinations, indicated by the serial numbers 4 and 7, of the through-current mode and the direction angle may further stimulate the permanent magnet loss. When the two integrated vector currents are used as implementations of the preheat current, the first motor has higher heating power loss, and can heat oil in the adjacent area of the first motor more quickly.

In this embodiment of this application, the first motor may be a motor with a built-in permanent magnet, for example, an SPM motor or an IPM motor, to stimulate more loss in the preheat mode, so that the oil in the adjacent area of the first motor can be heated more quickly.

In another implementation of the preheat current, the preheat current may be a zero-torque current, and the zero-torque current can enable the first motor to generate a zero torque. When the zero-torque current is injected into the first motor, the first motor does not rotate. In this case, electric energy of the first motor is not converted into mechanical energy, so that a higher proportion of electric energy corresponding to the preheat current is converted into thermal energy.

In actual application, Table 5 shows examples of preheat currents corresponding to the SPM motor and the IPM motor.

**Table 5**

| Motor type | Condition that the first vector current $Is_1$ corresponding to the preheat current meets | Description |
|---|---|---|
| SPM motor | $I_{q1} = 0$ , and $I_{d1}$ is not always zero, where $I_{d1} \leq I_{MAX}$. In an example, a through-current mode of $I_{d1}$ may be a direct current or an alternating current. | A torque of the SPM motor is generated by $I_{q1}$. Therefore, when $I_{q1} = 0$, the first vector current can enable the SPM motor to generate a zero torque. |
| IPM motor | $I_{q1} = 0$, and $I_{d1}$ is not always zero, where $I_{d1} \leq I_{MAX}$. In an example, a through-current mode of $I_{d1}$ may be a direct current or an alternating current. | A torque of the IPM motor is determined by a product of $I_{d1}$ and $I_{q1}$. Therefore, when $I_{q1} = 0$, the first vector current can enable the IPM motor to generate a zero torque. |

It should be noted that a through-current mode of the direct-axis current $I_{d1}$ may be a direct current, an alternating current, or an alternating current with a direct-current bias. The direct current represents a waveform in which neither an amplitude nor a phase changes with time. The alternating current represents a waveform in which a phase does not change, an amplitude alternately changes between a positive value and a negative value with time, and an average value of the amplitude is 0. The alternating current with a direct-current bias represents a waveform in which a phase does not change, an amplitude changes between a positive value and a negative value with time (or is only in a positive half-axis or only in a negative half-axis), and an average value of the amplitude is not 0.

S104: Start the first motor.

It should be noted that S102 is an optional step in this embodiment of this application.

In this manner of injecting the preheat current into the first motor when the first motor is in the stationary state and the temperature in the adjacent area is less than the cold-state temperature threshold, when the first motor is in the stationary state, the first motor can be enabled to generate heat, and the oil in the adjacent area of the first motor is heated by the heat generated by the first motor, so that the temperature of the oil in the adjacent area rises to exceed the cold-state temperature threshold as soon as possible, and viscosity of the oil decreases to a level at which the oil can be pushed or easily pushed by the first motor. This can avoid a problem that it is quite difficult for the motor to start to rotate when the oil temperature is less than the cold-state temperature threshold and fluidity of the oil is quite poor, and the first motor can easily push the oil when starting to rotate.

In a second optional implementation of the heating control method, the heating current may be a heat-boosting current.

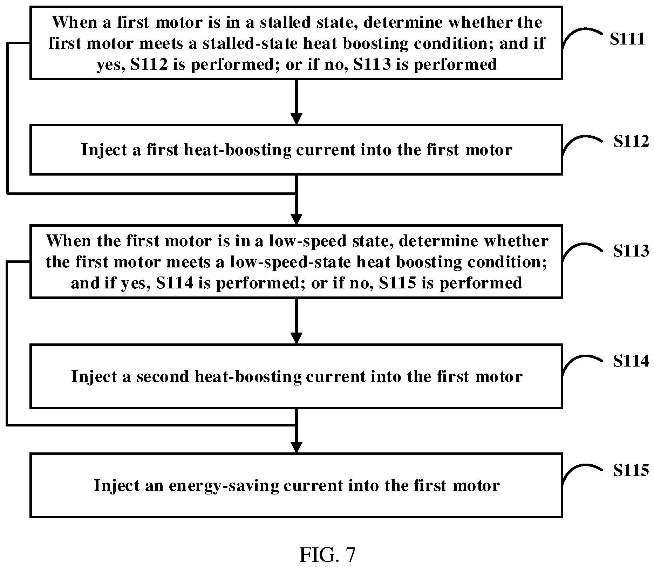

FIG. 7 is a second schematic flowchart of a heating control method according to an embodiment of this application.

As shown in FIG. 7, when a first motor is in a started state, this embodiment of this application may include the following steps.

S111: When the first motor is in a stalled state, determine whether the first motor meets a stalled-state heat boosting condition. If If the first motor meets the stalled-state heat boosting condition, S112 is performed. If the first motor does not meet the stalled-state heat boosting condition, S113 is performed.

Table 6 shows an example of the stalled-state heat boosting condition.

**Table 6**

| Whether the first motor is started | Stalled-state heat boostingt condition | Decision information 1 | Decision information 2 | Decision information 3 |
|---|---|---|---|---|
| Started | Determining condition | Temperature in an adjacent area of the first motor is less than or equal to -30°C. | Oil temperature in the adjacent area of the first motor is less than or equal to -30°C. | A rotational speed of the first motor is 0 or less than or equal to 1 r/s. |

S112: Inject a first heat-boosting current into the first motor.

In an example, when a rotational speed of the first motor is 0, a control objective of the first heat-boosting current may be the same as that of the preheat current in the foregoing embodiment. In an example, when a rotational speed of the first motor is not 0, a control objective of the first heat-boosting current may be the same as that of the heat-boosting current in the foregoing embodiment.

It should be noted that S111 and S112 are optional steps in this embodiment of this application.

S113: When the first motor is in a low-speed state, determine whether the first motor meets a low-speed-state heat boosting condition. If the first motor meets the low-speed-state heat boosting condition, S114 is performed. If the first motor does not meet the low-speed-state heat boosting condition, S115 is performed.

Table 7 shows an example of the slow-speed-state heat boosting condition.

**Table 7**

| Whether the first motor is started | Low-speed-state heat boosting condition | Decision information 1 | Decision information 2 | Decision information 3 |
|---|---|---|---|---|
| Started | Example 1 of a determining condition | Temperature in an adjacent area of the first motor is greater than -30°C and less than 10°C. | Oil temperature in the adjacent area of the first motor is greater than -30°C and less than 10°C. | A rotational speed of the first motor is greater than or equal to 0, or less than 50 r/s. |
| | Example 2 of a determining condition | Temperature in an adjacent area of the first motor is less than 10°C. | Oil temperature in the adjacent area of the first motor is less than 10°C. | A rotational speed of the first motor is 0 or less than 50 r/s. |

In this embodiment of this application, in an optional implementation, based on a heating condition shown in the example 2 of the determining condition, a control apparatus may selectively set the first motor to a heat-boosting mode or an energy-saving mode based on whether the first motor meets the heating condition.

For example, when it is determined that the first motor meets the heating condition and requires heat boosting, the first motor is set to the heat-boosting mode; or when it is determined that the first motor does not meet the heating condition, the first motor is set to the energy-saving mode. When the first motor is in the heat-boosting mode, the control apparatus may control the first motor to operate based on a heat-boosting current. When the first motor is in the energy-saving mode, the control apparatus may control the first motor to operate based on an energy-saving current.

S114: Inject a second heat-boosting current into the first motor.

In an example, a control objective of the second heat-boosting current may be the same as that of the heat-boosting current in the foregoing embodiment.

In this embodiment of this application, an amplitude of an integrated vector current corresponding to the heat-boosting current is greater than an amplitude of an integrated vector current corresponding to the energy-saving current.

In this embodiment of this application, the energy-saving current may be an integrated vector current that enables the first motor to reach a target operating condition and that meets a small-amplitude condition, or the energy-saving current is an integrated vector current that enables the first motor to reach a target operating condition and that meets an overall system efficiency condition.

In an example, the small-amplitude condition may be an integrated vector current that enables the first motor to reach the target operating condition and that has a smallest amplitude. In an example, the overall system efficiency condition may be an integrated vector current that enables the first motor to reach the target operating condition and that achieves highest overall system efficiency. In an example, overall system efficiency may be determined based on a proportion of heating power loss to total power. In an example, an integrated vector current determined based on a maximum efficiency per ampere (Max efficiency per ampere, MEPA) control mode may be considered as the integrated vector current used for achieving the highest overall system efficiency.

In this embodiment of this application, in an optional implementation, the control apparatus may first determine an energy-saving current corresponding to a current target operating condition of the first motor, and then adjust a current leading angle of an integrated vector current corresponding to the energy-saving current to obtain a heat-boosting current.

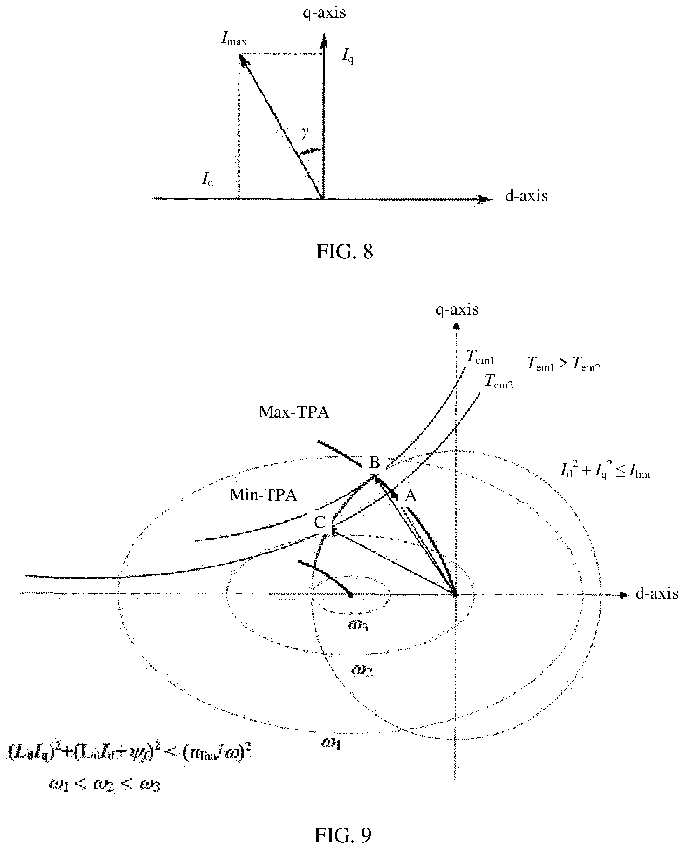

In actual application, FIG. 8 is a schematic diagram of a heat-boosting current used in an SPM motor according to an embodiment of this application. FIG. 9 is a schematic diagram of a heat-boosting current determined based on a Min-TPA mode according to an embodiment of this application. Table 8 shows examples of energy-saving currents and heat-boosting currents that correspond to an SPM motor and an IPM motor.

**Table 8**

| Motor type | Condition that an energy-saving vector current $Is_0$ corresponding to the energy-saving current meets | Example of the energy-saving current | Condition that a second vector current $Is_2$ corresponding to the heat-boosting current meets | Example of the heat-boosting current |
|---|---|---|---|---|
| SPM motor | $I_{d0} = 0$, and $I_{q0}$ is a quadrature-axis current that can reach a target torque in the target operating condition and that has a smallest amplitude or highest energy efficiency. The target torque may be determined according to an actual load requirement. | $I_q$ in FIG. 8 | $I_{d2} = 0$, and $I_{q2} > I_{q0}$. $I_{d2} = 0$ In an example, $I_{d2} = 0$, and $I_{q2} = I_{MAX}$. $I_{MAX}$ is a maximum current amplitude supported by the first motor. | $I_{MAX}$ in FIG. 8 |
| IPM motor | Determined based on a Max-TPA control mode | Vector current determined at a point A in FIG. 9 | Determined based on the Min-TPA control mode | Vector current determined at a point C in FIG. 9 |

It should be noted that, for an IPM oil pump motor, Max-TPA Maximum Torque Per Ampere) control may be used during operating. In this embodiment of this application, in the Min-TPA (Minimum Torque Per Ampere) control mode, heat generated by the oil pump motor can be further boosted by adjusting a current leading angle (to be specific, an included angle between an integrated vector current and a q-axis) during operating, to further improve heating effect for surrounding oil.

As shown in FIG. 9, $T_{em1}$ and $T_{em2}$ are equal-torque curves, where $T_{em1} > T_{em2}$. A circle with a point O as a center is a direct-axis/quadrature-axis current relationship circle. The relationship circle is determined based on the following formula: $I_d^2 + I_q^2 \leq I_{\lim}^2$. Three ellipses with coordinates $(-\psi_f, 0)$ as center points are rotational speed/voltage relationship ellipses represented by currents. The relationship ellipses are determined based on the following formula:

$$\left(L_q I_q\right)^2 + \left(L_d I_d + \psi_f\right)^2 \leq \left(u_{\lim}\middle/\omega\right)^2$$

, where $L_d$ is an inductance, $u_{\lim}$ is a direct-current bus voltage limit value, $\omega$ is a rotational speed, $\psi_f$ is a permanent magnet flux linkage generated by a permanent magnet, and rotational speeds corresponding to three ellipses meet the following condition: $\omega_1 < \omega_2 < \omega_3$. Operating points determined in the Max-TPA mode and the Min-TPA mode need to be located in the direct-axis/quadrature-axis current relationship circle, and located in a rotational speed/voltage relationship ellipse corresponding to a rotational speed in the target operating condition.

In an example, operating points determined based on integrated vector currents that can reach a torque $T_{em1}$ to a torque $T_{em2}$ and that have smallest amplitudes may form a curve between the point A and a point B. The point A is an operating point corresponding to an integrated vector current that can reach the torque $T_{em1}$ and that has a smallest amplitude. The point B may be an operating point corresponding to an integrated vector current that can reach the torque $T_{em2}$ and that has a smallest amplitude. A current that can reach the torque $T_{em2}$ and that has a maximum amplitude may be C.

In a normal operating mode, when a required torque is the $T_{em2}$, an operating point determined in the Max-TPA control mode is the point A in FIG. 9, to be specific, the point A is a coordinate point of the integrated vector current corresponding to the energy-saving current; and an operating point determined in the Min-TPA control mode is the point C in FIG. 9, to be specific, the point C is a coordinate point of the integrated vector current corresponding to the heat-boosting current. As shown in FIG. 9, the point C and the point A are located in the equal-torque curve $T_{em1}$. To be specific, at the two operating points, a same torque can be output, but operating current amplitudes are different. A current amplitude at the point C may reach the maximum value supported, and the current amplitude at the point C needs to be greater than that at the point A. Therefore, when the same torque is output, heat generated by the motor can be further boosted in an operating condition at the point C. In an optional implementation, the heat-boosting current may alternatively be in a curve between the point A and the point C.

In this embodiment of this application, a current amplitude and a current leading angle that correspond to a group of loads and torques may be tested in advance, and then the current leading angle may be directly increased or decreased based on the current amplitude. It should be noted that the current leading angle is adjusted, so that a torque of a finally obtained heat-boosting-mode current is greater than that of an energy-saving-mode current determined in the Max-TPA mode. This determining manner may also be referred to as the Min-TPA control mode.

In an optional implementation, the heat-boosting current may be implemented by using any one of the combinations of the through-current mode of the integrated current vector and the included angle that correspond to the serial numbers 2, 3, 5, 6, 8, and 9 and in which torques are generated in Table 4.

It should be noted that S113 and S114 are optional steps in this embodiment of this application.

S115: Inject an energy-saving current into the first motor.

In this embodiment of this application, for an implementation of the energy-saving current, refer to related descriptions in S114.

With the heat-boosting current provided in this embodiment of this application, when the first motor is in the started state, the first motor can reach the target operating condition, and continuously heat oil in the adjacent area of the first motor.

In this embodiment of this application, alternatively, when a rotational speed of the first motor is in one or more of a stationary state, a stalled state, and a low-speed state, the control apparatus may determine whether a heating current needs to be injected, and inject a heating current corresponding to each state when determining that a heating current needs to be injected.

Table 9 shows an example of a correspondence between a heating current injected into the first motor in each state and the state in this embodiment of this application.

**Table 9**

| Operating status of the first motor | | Determine whether heating is required | Example of a current injected into the first motor when heating is required |
|---|---|---|---|
| Operating status of the first motor | Rotational speed of the first motor | | |
| Non-started state | Stationary state | Heating is required. | Preheat current |
| Started state | Stalled state | Heating is required. | First heat-boosting current |

(continued)

| Operating status of the first motor | | Determine whether heating is required | Example of a current injected into the first motor when heating is required |
|---|---|---|---|
| Operating status of the first motor | Rotational speed of the first motor | | |
| Started state | Low-speed state | Heating is required. | Second heat-boosting current |
| Started state | High-speed state | Heating is not required. | Energy-saving current |

It should be further noted that, in this embodiment of this application, various determining conditions such as the heating condition and the cold-state condition may be used as conditions for determining whether the oil in the adjacent area of the first motor needs to be heated, and the foregoing determining conditions may be used in combination in different stages.

In this embodiment of this application, in an example, if an oil pump motor is an SPM motor, in a cold state, both the oil pump motor and a drive motor first heat oil in an "Id = Alternating current, Iq = 0" or "Id = Direct current, Iq = 0" mode. After temperature of surrounding oil rises, in a working condition in which a load torque reaches a maximum torque, operating is directly performed at full power, that is, $Iq = Iq\_max$. In a working condition in which a load torque does not reach a maximum torque, a current leading angle is adjusted, so that an output torque meets a load requirement and $I = I\_max$ to retain loss. The Id = Alternating current indicates that a through-current mode of a direct-axis current is an alternating-current mode. To be specific, an amplitude of the direct-axis current changes with time. The Id = Direct current indicates that a through-current mode of a direct-axis current is a direct-current mode. To be specific, an amplitude of the direct-axis current does not change with time.

In this embodiment of this application, in an example, for an oil pump with an interior permanent magnet machine (IPM), in a cold state, both an oil pump motor and a drive motor first heat oil in an "Id = Alternating current, Iq = 0" or "Id = Direct current, Iq = 0" mode. After temperature of surrounding oil rises, conventional Max-TPA control is changed to Min-TPA control to further heat the oil. The Id = Alternating current indicates that a through-current mode of a direct-axis current is an alternating-current mode. To be specific, an amplitude of the direct-axis current changes with time. The Id = Direct current indicates that a through-current mode of a direct-axis current is a direct-current mode. To be specific, an amplitude of the direct-axis current does not change with time.

**Embodiment 2**

An embodiment of this application further provides an optional implementation of a heating condition.

In a third optional implementation of a heating control method, when a first motor is in a started state, the heating condition in any one of the heating control methods in the foregoing embodiments may alternatively be a low-loss condition. A control apparatus may inject a heating current into the first motor when the low-loss condition is met. The heating current may be implemented in any one of the manners in the foregoing embodiments.

Table 10 shows an example of the low-loss condition.

**Table 10**

| Whether the first motor is started | Low-loss condition | Decision information 5 |
|---|---|---|
| Started | Example 1 of a determining condition | An operating condition of the first motor is the low-loss condition, where heating power loss corresponding to the low-loss condition is less than expected heating power loss. |
| | Example 2 of a determining condition | Heating power loss corresponding to an operating condition of the first motor is less than the expected heating power loss. |

In this embodiment of this application, the operating condition of the first motor may include two operating parameters: a rotational speed and a torque. The low-loss condition may be a combination of a rotational speed and a torque that corresponds to heating power loss less than an expected heating power loss threshold. In this embodiment of this application, in an optional implementation, before determining whether the heating condition is met, the control apparatus may capture heating power loss corresponding to operating of the first motor in at least two operating conditions, and then determine that an operating condition corresponding to heating power loss less than the expected heating power loss threshold is the low-loss condition.

In this embodiment of this application, it should be noted that there are a plurality of implementations of selecting the expected heating power loss. For example, an operating condition in which heating power loss is greater than the expected heating power loss threshold may be referred to as a high-loss condition. When the first motor operates in the high-loss condition, heating power loss can enable the first motor to get out of any one of the foregoing cold-state conditions within expected startup time. For example, when the first motor operates in the high-loss condition, heating power loss of the first motor is greater than the expected heating power loss. In other embodiments of this application, other optional implementations of determining the low-loss condition and selecting the expected heating power loss threshold are described in detail. Details are not described herein.

In this embodiment of this application, the expected heating power loss threshold may alternatively be determined in the following implementations.

In a possible implementation of determining the expected heating power loss threshold, a value range of heating power loss of the first motor includes at least two power ranges that do not overlap with each other, the expected heating power loss is a maximum power value in a smallest power range of the at least two power ranges, and a combination of a rotational speed and a torque that corresponds to the low-loss condition belongs to a value range, corresponding to the smallest power range, of a combination of a rotational speed and a torque. The value range of the heating power loss of the first motor is determined based on a value range of a combination of a rotational speed and a torque of the first motor.

In an example, heating power loss corresponding to different operating conditions is captured in advance, and the heating power loss corresponding to the different operating conditions is divided according to a distribution regularity of power values, to obtain several power ranges, where a variance between heating power loss in each power range and a median of the power range is less than a deviation threshold. Then maximum heating power loss may be equally divided into several parts, to obtain several power ranges, and a quantity of power ranges obtained through division may be 2, 3, or the like.

In another possible implementation of determining the expected heating power loss threshold, the expected heating power loss is maximum heating power loss of the first motor multiplied by an expected thermal energy conversion proportion. In an example, the expected thermal energy conversion proportion may be 30%, 50%, or the like.

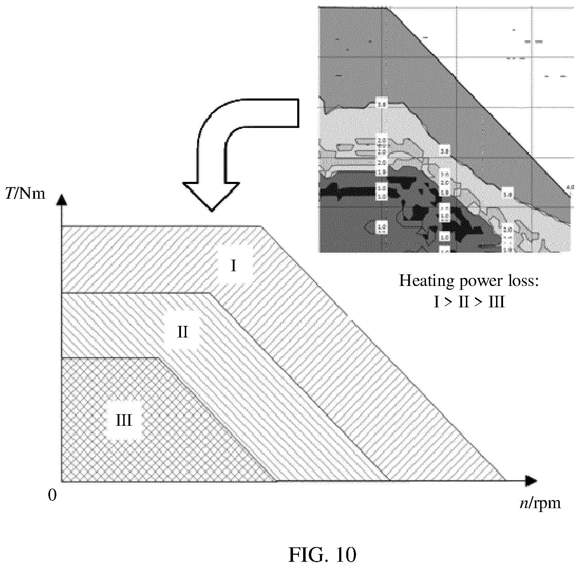

For example, FIG. 10 is a schematic diagram of a mapping relationship between an external characteristic curve corresponding to an operating condition of a first motor and corresponding heating power loss according to an embodiment of this application. It should be noted that, an external characteristic curve of the first motor during operating may be a curve in which power or torque measured during full-load operating of the first motor changes with a rotational speed, and an outer envelope curve of an operating range of the first motor may be obtained based on the external characteristic curve.

As shown in FIG. 10, a horizontal axis indicates a rotational speed, and a vertical axis indicates a torque. In an example, heating power loss may be classified into at least two levels based on distribution of the heating power loss. In an example, heating power loss in FIG. 10 may be classified into three levels, which are heating power loss corresponding to an operating condition I, an operating condition II, and an operating condition III respectively. Heating power loss of I is greater than heating power loss of II, and the heating power loss of II is greater than heating power loss of III.

In an example, the first motor has larger heating loss near the external characteristic curve, and has smaller heating loss in an internal area away from the external characteristic. For example, in FIG. 10, heating power loss corresponding to a point in the operating condition III is greater than heating power loss corresponding to a point in the operating condition I.

In an example, the operating condition I may be selected as the low-loss condition.

In this manner, after the first motor is started, whether to inject a heating current into the first motor (or set the first motor to enter a heat-boosting mode) may be directly determined based on whether a current operating condition is the low-loss condition, and real-time heating power loss of the first motor does not need to be calculated during operating of the first motor to determine whether the real-time heating power loss of the first motor can quickly enable the first motor to get out of the cold-state condition.

In this embodiment of this application, the expected heating power loss threshold may alternatively be implemented in a plurality of manners.

In an optional implementation of the expected heating power loss threshold, the expected heating power loss threshold may be determined based on a difference between temperature of oil in an adjacent area of the first motor and a cold-state temperature threshold.

In an example, the control apparatus may determine, based on heating power loss of each of the at least two operating conditions, an oil temperature variation corresponding to each operating condition within unit time, where the oil temperature variation is a temperature rise amount of the oil in the adjacent area of the first motor.

In an example, the control apparatus may further adjust the expected heating power loss threshold based on the temperature of the oil in the adjacent area of the first motor. In an example, the control apparatus may set the expected heating power loss threshold to decrease with an increase of the temperature in the adjacent area of the first motor. In actual application, at a first moment after the first motor is started, the expected heating power loss threshold is maximum heating power loss of the first motor; and at a second moment later than the first moment, the expected heating power loss threshold decreases with an increase of the temperature in the adjacent area of the first motor.

In another optional implementation of the expected heating power loss threshold, the control apparatus may determine the expected heating power loss threshold based on temperature of oil in an adjacent area. In actual application, when the first motor is an oil-cooled drive motor, the expected heating power loss threshold of the first motor may be determined based on temperature of oil in an adjacent area of the first motor, and a target operating condition of the first motor is determined according to an actual requirement. For example, when load of an electric vehicle is high, the first motor needs to provide a large torque; and when a driving speed of the electric vehicle is high, the first motor needs to provide a high rotational speed.

In still another optional implementation of the expected heating power loss threshold, when the first motor is an oil pump motor, the expected heating power loss threshold of the first motor may be determined based on temperature of oil in an adjacent area of the first motor, and a target operating condition of the first motor is determined according to an actual requirement. For example, when a drive motor of an electric vehicle operates in a high-loss condition, the drive motor generates a large amount of heat, and the first motor needs to provide a high rotational speed to accelerate circulation of cooling oil; when the drive motor operates in a low-loss condition, the drive motor generates a small amount of heat, and the first motor may need to provide a low rotational speed; and when the temperature of the oil in the adjacent area of the first motor is less than a cold-state temperature threshold, the oil has high viscosity, and the first motor needs to generate a large torque to drive the oil.

In this embodiment of this application, the heating condition may be a combination of the cold-state condition and the low-loss condition.

In an example, the control apparatus may inject a heat-boosting-mode current into the first motor when an operating condition of the first motor is the low-loss condition and the temperature in the adjacent area of the first motor is less than the cold-state temperature threshold. This is described in other embodiments of this application, and details are not described herein.

In an example, the control apparatus may inject an energy-saving-mode current into the first motor when the temperature in the adjacent area of the first motor is greater than a high-flow-rate temperature threshold or the first motor does not operate in the low-loss condition. This is described in other embodiments of this application, and details are not described herein.

For details and technical effect of other technical solutions in this embodiment of this application, refer to related descriptions in other embodiments of this application.

**Embodiment 3**

An embodiment of this application further provides a heating control method. The method may be applied to the heat exchange system in the foregoing embodiments. This embodiment of this application may be performed by a control apparatus, and the control apparatus may be located in the heat exchange system in the foregoing embodiments.

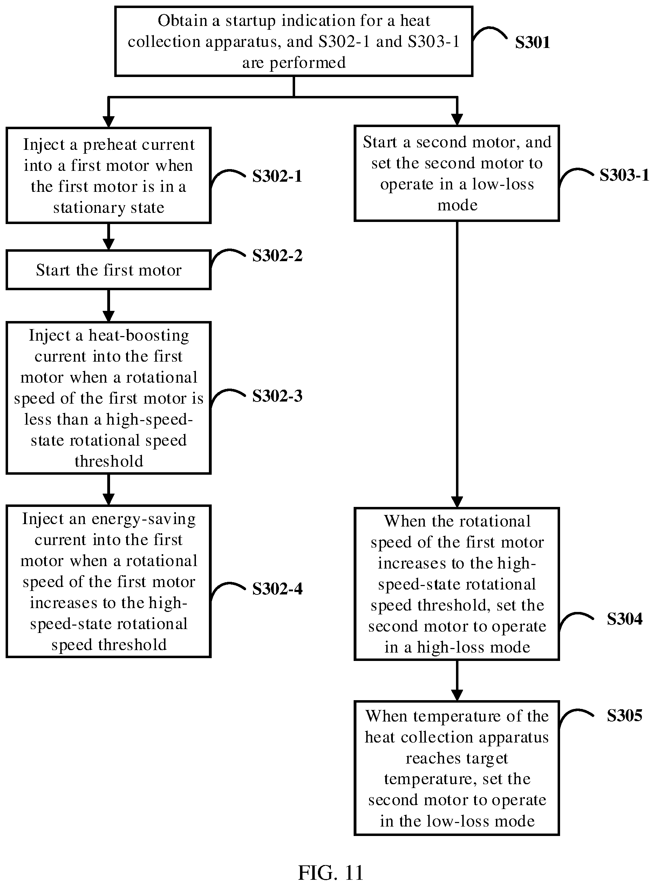

FIG. 11 is a third schematic flowchart of a heating control method according to an embodiment of this application. As shown in FIG. 11, this embodiment of this application may include the following steps.

S301: Obtain a startup indication for a heat collection apparatus. S302-1 and S303-1 are performed.

In an optional implementation, the obtaining a startup indication for a heat collection apparatus may alternatively be implemented in a manner of obtaining a startup indication for a second motor.

S302-1: Inject a preheat current into a first motor when the first motor is in a stationary state.

In an example, the preheat current is injected into the first motor when the first motor is in the stationary state and meets a cold-state preheat condition.

S302-2: Start the first motor.

S302-3: Inject a heat-boosting current into the first motor when a rotational speed of the first motor is less than a high-speed-state rotational speed threshold.

In an example, a first heat-boosting current is injected into the first motor when a rotational speed of the first motor is less than a low-speed-state rotational speed threshold, or a second heat-boosting current is injected into the first motor when a rotational speed of the first motor is greater than the low-speed-state rotational speed threshold and less than the high-speed-state rotational speed threshold.

S302-4: Inject an energy-saving current into the first motor when a rotational speed of the first motor increases to the high-speed-state rotational speed threshold.

S303-1: Start the second motor, and set the second motor to operate in a low-loss mode.

Heating loss in an operating condition of the second motor is less than a low-loss-mode heating power threshold.

In an optional implementation, after S303-1, the control apparatus may synchronously increase the low-loss-mode heating power threshold when the rotational speed of the first motor increases. An increase proportion of low-loss-mode heating power may be in a linear relationship with an increase proportion of the rotational speed of the first motor.

S304: When the rotational speed of the first motor increases to the high-speed-state rotational speed threshold, set the second motor to operate in a high-loss mode.

It should be noted that heat generated by the second motor is transferred to the heat collection apparatus through a heat exchanger.

S305: When temperature of the heat collection apparatus reaches target temperature, set the second motor to operate in the low-loss mode.

In the method provided in this embodiment of this application, in a scenario in which the heat collection apparatus is heated by heat generated by the second motor, the preheat current is first injected into the first motor, so that temperature of oil in an adjacent area of the first motor rises to exceed a cold-state temperature threshold, and the first motor can rotate as soon as possible; and then the heat-boosting current is injected into the first motor to continuously heat the oil in the adjacent area of the first motor, so that the oil temperature rises to achieve a peak flow rate, and a heat dissipation capability of an oil-cooled circulation loop for cooling the second motor reaches a maximum value. In addition, before the oil temperature rises to achieve the peak flow rate, the second motor operates in the low-loss mode. This can avoid a problem that the second motor is burnt due to overheat when the heat dissipation capability of the oil-cooled circulation loop does not reach the maximum value. In addition, when the heat dissipation capability of the oil-cooled circulation loop increases with the oil temperature, heating loss of the second motor may gradually increase; or when the heat dissipation capability of the oil-cooled circulation loop reaches the maximum value, the second motor may enter the high-loss mode, so that the heat collection apparatus can obtain thermal energy as soon as possible.

For details and technical effect of other technical solutions in this embodiment of this application, refer to descriptions in other embodiments of this application.

The heating control method in this embodiment of this application may be applied to a single-motor control scenario such as an oil pump motor or an oil-cooled motor, and a heat exchange system control scenario.

In the single-motor control scenario, the heating control method in this embodiment of this application mainly relates to processing processes in the following aspects.

In an aspect, after obtaining a startup indication for a first motor, a control apparatus may inject a heating current into the first motor before or after the first motor is started. In a manner in which the heating current is injected into the first motor before the first motor is started, a control mode of first preheating the first motor and then starting the first motor can be implemented. When the first motor is at lowest temperature, oil can be preheated first, so that the first motor can quickly get out of a state in which the first motor cannot rotate.

In another aspect, the control apparatus may determine, based on at least one type of control decision information such as temperature in an adjacent area of the first motor or a rotational speed or a working condition of the first motor, whether the first motor meets a heating condition, that is, determine whether heat boosting is required for the first motor; and inject a heating current into the first motor after determining that the heating condition is met. The determining, based on the temperature and the rotational speed condition, whether the heating condition is met is intended to determine whether the first motor operates in a low-temperature environment. The determining, based on the working condition, whether the heating condition is met may be intended to determine whether a current amount of heat generated by the first motor can enable the temperature in the adjacent area of the first motor to increase to required temperature as soon as possible.

In still another aspect, the control apparatus may determine, based on at least one type of control reference information such as the temperature in the adjacent area of the first motor, an operating status of the first motor, or a type of the first motor, a control objective for a heating current used for heat boosting. The control objective is mainly intended to control a torque and thermal energy that are generated by a current injected into the first motor. For example, with respect to a target torque and a target rotational speed that are set in a target operating condition, when the operating status is a stalled state, a torque is reduced; when the operating status is a low-speed state, a torque is increased; or when the operating status is a high-speed state, a torque is adjusted back to the target torque. In another example, when the first motor is an SPM motor, in the stalled state, a quadrature-axis current may be set to zero, and a direct-axis current may be set to a non-zero value. When the first motor is an IPM motor, in the stalled state and the low-speed state, an amplitude of a heat-boosting current may be set to reach a maximum torque.

In the heat exchange system control scenario, the heating control method in this embodiment of this application may mainly include a collaboration process between a first motor located in an oil pump, a drive motor cooled in an oil-cooled mode, and a heat collection apparatus that needs to be heated in a heat exchange system. A control objective of the collaboration process includes the following several aspects.

In an aspect, a flow rate of oil in an oil pipe is enabled to reach a high-speed-state flow rate threshold within short time, to prevent temperature of the drive motor from exceeding a limit.

In another aspect, temperature of the heat collection apparatus is enabled to reach target operating temperature within short time, to ensure normal operating of the heat collection apparatus.

In this embodiment of this application, a specific implementation of an overall heat dissipation architecture in which the oil pump motor assists in oil heating to increase a circulation rate of the oil pump and improve heat dissipation for the drive motor may be described as follows.

(1) The oil pump does not rotate or has a low rotational speed at low temperature, and heat generated by the oil pump is boosted by using the method proposed in the present invention.
(2) Oil around the oil pump is heated, viscosity of the oil decreases, and the rotational speed of the oil pump increases correspondingly.
(3) Circulation of an oil channel is accelerated, a heat dissipation capability of the drive motor is enhanced, and the drive motor can increase its own heating power to further heat the oil.
(4) The rotational speed of the oil pump further increases, the circulation of the oil channel is further accelerated, the drive motor finally enters a good heat dissipation state, and heat taken away by the oil is used to heat water through an oil-water heat exchanger.
(5) Cooling water first passes through an MCU, absorbs heat of the MCU, and then absorbs, through the oil-water heat exchanger, the heat taken away by the oil.
(6) Heated water flows out of the oil-water heat exchanger and flows into a cooling water pipe of a battery pack to heat the battery pack, and the cooling water is cooled.

It should be noted that the water (or the cooling water) is cooling liquid including antifreeze, and does not specifically refer to pure water or an aqueous solution including a specific component, provided that the foregoing cooling function can be implemented.

In this embodiment of this application, in an example, the control apparatus may be located in a control center of an electric vehicle, and the control apparatus may obtain a startup control indication for each component in the electric vehicle.

In an optional implementation, before the injecting a preheat current into a first motor when the first motor is in a stationary state, the method may include: obtaining a startup control indication for the second motor, where the second motor is an oil-cooled motor, and the first motor is configured to drive cooling oil to flow to the second motor through an oil pipe.

In an optional implementation, after the obtaining a startup control indication for the second motor, the method further includes: starting the second motor; and controlling the second motor to operate in a low-heating condition, where heating power loss in the low-heating condition is less than a restricted-condition heating power threshold, and the restricted-condition heating power threshold is determined based on the rotational speed of the first motor.

In an optional implementation, the method further includes: when oil temperature of the cooling oil exceeds a high-flow-rate temperature threshold, controlling the second motor to operate in a high-heating condition, where heating power loss in the high-heating condition is greater than the restricted-condition heating power threshold, and the restricted-condition heating power threshold is determined based on the rotational speed of the first motor.

In an optional implementation, the second motor is a drive motor that drives a wheel in an electric vehicle to rotate, the electric vehicle further includes a battery, and before the obtaining a startup control indication for the second motor, the method further includes: obtaining a startup indication for the battery, where the battery is connected to a downstream oil pipe through a heat exchanger, and the downstream oil pipe is an oil pipe between the second motor and a liquid inlet of the first motor.

When a vehicle is started and a motor is stationary, the technical solution provided in this embodiment of this application may be used as a method for controlling operating of an oil pump motor. When the method is used with an oil pump motor with an oil-immersed air gap, oil can be heated by additional heat generated by an oil pump in a low-temperature state, so that viscosity of the oil decreases, a rotational speed of the oil pump can increase quickly, and circulating cooling oil is provided normally. In this way, a capability of oil to take away heat generated by the motor when the vehicle starts at low temperature is improved, and self-heating efficiency of the motor is improved when the vehicle starts at low temperature. In addition, in the technical solution provided in this embodiment of this application, during operating of the oil pump motor, additional heat can be continuously provided for heating the oil. In the technical solution provided in this embodiment of this application, circulation of oil can be accelerated, to help improve a capability of a drive motor to generate heat to heat a battery pack.

**Embodiment 4**

An embodiment of this application further provides a control apparatus.

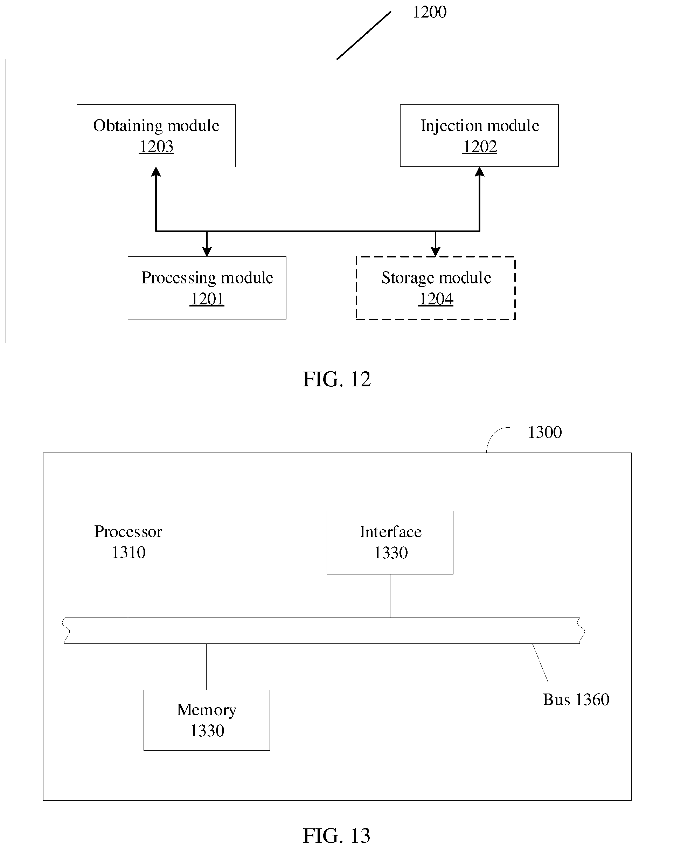

FIG. 12 is a first schematic diagram of a structure of a control apparatus according to an embodiment of this application. As shown in FIG. 12, the control apparatus 1200 may include a processing module 1201 and an injection module 1202. In an optional implementation, the apparatus 1200 may further include an obtaining module 1203 and a storage module 1204. The obtaining module may be configured to obtain at least one type of decision information in the foregoing embodiments, for example, a rotational speed of a first motor, a rotational speed in an adjacent area of the first motor, temperature in the adjacent area of the first motor, an operating condition of the first motor, or heating power loss corresponding to the operating condition of the first motor. The storage module is configured to store instructions and data.

The processing module is configured to inject a heating current into the first motor through the injection module when a cold-state condition is met, where

the first motor is an oil pump motor in an oil pump, and the heating current meets the following control objective: when the first motor is in a non-started state, the heating current is a zero-torque current, and a torque that the zero-torque current is capable of generating is zero; and/or when the first motor is in a started state, the heating current is a heat-boosting current, and heating power of the heat-boosting current is greater than heating power of an energy-saving current, where the energy-saving current is a current capable of enabling the first motor to reach a target operating condition when oil temperature is greater than a preset temperature threshold.

In an optional implementation, the cold-state condition may include:

temperature in an adjacent area of the first motor is less than the preset temperature threshold; or
a rotational speed of the first motor that operates based on the energy-saving current is less than a preset rotational speed threshold, where the preset rotational speed threshold is a target rotational speed in the target operating condition.

In an optional implementation, the cold-state condition may include:

an operating condition of the first motor is a low-loss condition, where heating power loss in the low-loss condition is less than an expected heating power loss threshold; or
heating power loss corresponding to an operating condition of the first motor is less than the expected heating power loss threshold, where
the expected heating power loss is used to enable the first motor to increase the oil temperature to the preset temperature threshold within preset time.

It should be noted that the foregoing two implementations of the cold-state condition may alternatively be combined.

In an optional implementation, the processing module is further configured to inject an energy-saving current into the first motor when the cold-state condition is not met.

In an optional implementation, the energy-saving current is a current that enables the first motor to reach the target operating condition and that meets a small-amplitude condition, or the energy-saving current is a current that enables the first motor to reach the target operating condition and that meets a mechanical energy conversion efficiency condition of an entire system.

In an optional implementation, the heat-boosting current is a first heat-boosting current or a second heat-boosting current;

total power of the first heat-boosting current is equal to total power of the energy-saving current, and a proportion of heating power of the first heat-boosting current to the total power of the first heat-boosting current is greater than a proportion of the heating power of the energy-saving current to the total power of the energy-saving current; and
a proportion of heating power of the second heat-boosting current to total power of the second heat-boosting current is equal to a proportion of the heating power of the second heat-boosting current to the total power of the second heat-boosting current, and the total power of the second heat-boosting current is greater than the total power of the energy-saving current.

In an optional implementation, the heat-boosting current is a first heat-boosting current or a second heat-boosting current;

an amplitude of an integrated vector current corresponding to the first heat-boosting current in a dq rotating coordinate system is equal to an amplitude of an integrated vector current corresponding to the energy-saving current, and a torque that the second heat-boosting current is capable of generating is less than a torque that the energy-saving current is capable of generating; and

a torque that the first heat-boosting current is capable of generating is equal to the torque that the energy-saving current is capable of generating, and an amplitude of an integrated vector current corresponding to the first heat-boosting current in the dq rotating coordinate system is greater than the amplitude of the integrated vector current corresponding to the energy-saving current.

In an optional implementation, the processing module may be specifically configured to inject the first heat-boosting current into the first motor when the first motor is in a stalled state, where when the first motor is in the stalled state, the first motor is in the started state, and a rotational speed that the first motor is capable of reaching based on the energy-saving current is less than or equal to a cold-state rotational speed threshold, where the cold-state rotational speed threshold is 0 or a rotational speed that the first motor is capable of reaching when the oil temperature is equal to a cold-state temperature threshold, and the cold-state temperature threshold is less than or equal to the preset temperature threshold.

In an optional implementation, the processing module is specifically configured to inject the second heat-boosting current into the first motor when the first motor is in a low-speed state, where when the first motor is in the low-speed state, the first motor is in the started state, and a rotational speed that the first motor is capable of reaching based on the energy-saving current is less than a high-speed-state rotational speed threshold, where the high-speed-state rotational speed threshold is a rotational speed that the first motor is capable of reaching when the oil temperature is greater than or equal to a high-speed-state temperature threshold, and the high-speed-state temperature threshold is greater than the cold-state temperature threshold.

In an optional implementation, the first motor is an SPM motor or an IPM motor; and a direct-axis current of the integrated vector current corresponding to the first heat-boosting current in the dq rotating coordinate system is not 0, and a quadrature-axis current is 0.

In an optional implementation, the first motor is the SPM motor;

an integrated vector current corresponding to the second heat-boosting current in the dq rotating coordinate system is a second vector current, and an integrated vector current corresponding to the energy-saving current in the dq rotating coordinate system is an energy-saving vector current; and
a direct-axis current of the second vector current is equal to a direct-axis current of the energy-saving vector current, and an amplitude of the second vector current is equal to a maximum amplitude supported by the first motor.

In an optional implementation, the first motor is the IPM motor;

an integrated vector current corresponding to the second heat-boosting current in the dq rotating coordinate system is a second vector current, and an integrated vector current corresponding to the energy-saving current in the dq rotating coordinate system is an energy-saving vector current;
the energy-saving vector current is a vector current that is capable of generating a target torque and that has a smallest amplitude; and
the second vector current is a vector current that is capable of generating the target torque and that has an amplitude greater than the amplitude of the energy-saving vector current, where
the amplitude of the second vector current is less than or equal to a maximum amplitude supported by the first motor.

In an optional implementation, the integrated vector current corresponding to the first heat-boosting current in the dq rotating coordinate system is a first vector current, and the first vector current meets the following control objective:

an included angle between the first vector current and a d-axis is 0, and a through-current mode of the zero-torque vector current is an alternating-current mode, where
the alternating-current mode indicates that an amplitude of the preheat vector current changes with time.

In an optional implementation, in the dq rotating coordinate system, the integrated vector current corresponding to the second heat-boosting current in the dq rotating coordinate system is the second vector current, and the second vector current meets any one of the following control objectives:

a through-current mode of the second vector current is a direct-current mode, and an included angle between the second vector current and a d-axis changes with time; or
a through-current mode of the second vector current is an alternating-current mode, where
the direct-current mode indicates that an amplitude of the second vector current does not change with time, and the alternating-current mode indicates that an amplitude of the second vector current changes with time.

In an optional implementation, an integrated vector current corresponding to the zero-torque current in the dq rotating coordinate system is a zero-torque vector current, and the zero-torque vector current meets the following control objective:

an included angle between the zero-torque vector current and the d-axis is 0, and a through-current mode of the zero-torque vector current is an alternating-current mode, where
the alternating-current mode indicates that an amplitude of the preheat vector current changes with time.

In a possible implementation, an integrated vector current corresponding to the heating current in the dq coordinate system may meet any one of the following control objectives:

a through-current mode is a direct-current mode, and an included angle between the d-axis and the integrated vector current corresponding to the heating current changes with time; or
a through-current mode is an alternating-current mode without a direct-current bias; or
a through-current mode is an alternating-current mode with a direct-current bias.

In an optional implementation, the first motor includes a motor cavity connected to an oil pipe, the motor cavity is configured to accommodate a stator and a rotor of the first motor, and an air gap between the stator and the rotor of the first motor is connected to the oil pipe; and
when the oil pump motor operates, the motor cavity is filled with oil, and the rotor is in contact with the oil in the motor cavity.
In an optional implementation, the obtaining module is configured to: before the heating current is injected into the first motor through the injection module, obtain a startup indication for a second motor, where the second motor is an oil-cooled motor, and the first motor is configured to drive cooling oil to flow to the second motor through the oil pipe; and

the processing module is further configured to: after the startup indication for the second motor is obtained, start the second motor through the injection module; and control, through the injection module, the second motor to operate in a low-loss mode, where
heating power loss of the second motor in an operating condition when the second motor operates in the low-loss mode is less than a cold-state heat dissipation power threshold, the cold-state heat dissipation power threshold is determined based on the cold-state rotational speed threshold, the cold-state rotational speed threshold is a rotational speed that the first motor is capable of reaching when the oil temperature reaches the cold-state temperature threshold, and the cold-state rotational speed threshold is less than or equal to the preset temperature threshold.

In an optional implementation, the processing module is further configured to: when a rotational speed of the first motor is greater than or equal to a high-flow-rate rotational speed threshold, control, through the injection module, the second motor to operate in a high-loss mode, where
heating power loss of the second motor in an operating condition when the second motor operates in the high-loss mode is greater than a high-speed-state heat dissipation power threshold, the high-speed-state heat dissipation power threshold is determined based on the high-speed-state rotational speed threshold, and the high-speed-state rotational speed threshold is a rotational speed that the first motor is capable of reaching when the oil temperature reaches the high-speed-state temperature threshold.
In an optional implementation, the obtaining module is further configured to: before the startup control indication for the second motor is obtained, obtain a startup indication for a heat collection apparatus, where
the second motor is a drive motor that drives a wheel in an electric vehicle to rotate, the electric vehicle further includes the heat collection apparatus, the heat collection apparatus is a battery or a cockpit heating apparatus, the heat collection apparatus and the oil pipe form a heat exchange connection through a heat exchanger, and the heat exchanger is located on the oil pipe through which the cooling oil flows from the second motor to the first motor.
For details and technical effect of other technical solutions in this embodiment of this application, refer to related descriptions in other embodiments of this application.
FIG. 13 is a second schematic diagram of a structure of a control apparatus according to an embodiment of this application.
As shown in FIG. 13, an embodiment of this application further provides a control apparatus 1300, including a processor 1310 and an interface 1320. In an optional implementation, the control apparatus 1300 may further include a memory and a bus 1360.
In an optional implementation, the processor may be configured to implement the functions of the processing module in the foregoing embodiment, and the interface may be configured to implement the functions of the obtaining module and the injection module in the foregoing embodiment.
In a possible implementation, the apparatus may be a controller, or may be a chip in a controller.
When the apparatus is the controller, the processing module may be a processor, and the transceiver module may be a transceiver. If the storage module is further included, the storage module may be a memory.

When the apparatus is the chip in the controller, the processing module may be a processor, and the transceiver module may be an input/output interface, a pin, a circuit, or the like. If the storage module is further included, the storage module may be an internal storage module (for example, a register or a cache) of the chip, or may be an external storage module (for example, a read-only memory or a random access memory) of the chip.

Any aforementioned processor may be a general-purpose central processing unit (Central Processing Unit, CPU for short), a microprocessor, an application-specific integrated circuit (application-specific integrated circuit, ASIC for short), or one or more integrated circuits for controlling program execution for the spatial multiplexing methods in the foregoing aspects.

In an example, the controller may be a control center of an electric vehicle.

According to another aspect, this application provides a computer-readable storage medium. The computer-readable storage medium stores instructions, and the instructions may be executed by one or more processors in a processing circuit. When the instructions run on a computer, the computer is enabled to perform the method in any one of the possible implementations in the foregoing embodiments.

According to another aspect, a computer program product including instructions is provided. When the computer program product runs on a computer, the computer is enabled to perform the method in any one of the possible implementations in the foregoing embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

**Claims**

1. A heating control method, wherein the method comprises:

   injecting a heating current into a first motor when a cold-state condition is met, wherein
   the first motor is an oil pump motor in an oil pump, and the heating current meets the following control objective:
   when the first motor is in a non-started state, the heating current is a zero-torque current, and a torque that the zero-torque current is capable of generating is zero; and/or when the first motor is in a started state, the heating current is a heat-boosting current, and heating power of the heat-boosting current is greater than heating power of an energy-saving current, wherein the energy-saving current is a current capable of enabling the first motor to reach a target operating condition when oil temperature is greater than a preset temperature threshold.

2. The method according to claim 1, wherein the cold-state condition comprises:

   temperature in an adjacent area of the first motor is less than the preset temperature threshold; or
   a rotational speed of the first motor that operates based on the energy-saving current is less than a preset rotational speed threshold, wherein the preset rotational speed threshold is a target rotational speed in the target operating condition.

3. The method according to claim 1 or 2, wherein the cold-state condition comprises:

   an operating condition of the first motor is a low-loss condition, wherein heating power loss in the low-loss condition is less than an expected heating power loss threshold; or
   heating power loss corresponding to an operating condition of the first motor is less than the expected heating power loss threshold, wherein

the expected heating power loss is used to enable the first motor to increase the oil temperature to the preset temperature threshold within preset time.

4. The method according to claim 2 or 3, wherein the method further comprises:
injecting the energy-saving current into the first motor when the cold-state condition is not met.

5. The method according to any one of claims 1 to 4, wherein the energy-saving current is a current that enables the first motor to reach the target operating condition and that meets a small-amplitude condition, or the energy-saving current is a current that enables the first motor to reach the target operating condition and that meets a mechanical energy conversion efficiency condition of an entire system.

6. The method according to any one of claims 1 to 5, wherein the heat-boosting current is a first heat-boosting current or a second heat-boosting current;

total power of the first heat-boosting current is equal to total power of the energy-saving current, and a proportion of heating power of the first heat-boosting current to the total power of the first heat-boosting current is greater than a proportion of the heating power of the energy-saving current to the total power of the energy-saving current; and
a proportion of heating power of the second heat-boosting current to total power of the second heat-boosting current is equal to a proportion of the heating power of the second heat-boosting current to the total power of the second heat-boosting current, and the total power of the second heat-boosting current is greater than the total power of the energy-saving current.

7. The method according to any one of claims 1 to 6, wherein the heat-boosting current is a first heat-boosting current or a second heat-boosting current;

an amplitude of an integrated vector current corresponding to the first heat-boosting current in a dq rotating coordinate system is equal to an amplitude of an integrated vector current corresponding to the energy-saving current, and a torque that the second heat-boosting current is capable of generating is less than a torque that the energy-saving current is capable of generating; and
a torque that the first heat-boosting current is capable of generating is equal to the torque that the energy-saving current is capable of generating, and an amplitude of an integrated vector current corresponding to the first heat-boosting current in the dq rotating coordinate system is greater than the amplitude of the integrated vector current corresponding to the energy-saving current.

8. The method according to claim 6 or 7, wherein the injecting a heating current into a first motor when a cold-state condition is met comprises:

injecting the first heat-boosting current into the first motor when the first motor is in a stalled state, wherein when the first motor is in the stalled state, the first motor is in the started state, and a rotational speed that the first motor is capable of reaching based on the energy-saving current is less than or equal to a cold-state rotational speed threshold, wherein the cold-state rotational speed threshold is 0 or a rotational speed that the first motor is capable of reaching when the oil temperature is equal to a cold-state temperature threshold, and the cold-state temperature threshold is less than or equal to the preset temperature threshold.

9. The method according to claim 8, wherein the injecting a heating current into a first motor when a cold-state condition is met comprises:

injecting the second heat-boosting current into the first motor when the first motor is in a low-speed state, wherein when the first motor is in the low-speed state, the first motor is in the started state, and a rotational speed that the first motor is capable of reaching based on the energy-saving current is less than a high-speed-state rotational speed threshold, wherein the high-speed-state rotational speed threshold is a rotational speed that the first motor is capable of reaching when the oil temperature is greater than or equal to a high-speed-state temperature threshold, and the high-speed-state temperature threshold is greater than the cold-state temperature threshold.

10. The method according to claim 8 or 9, wherein the first motor is an SPM motor or an IPM motor; and
a direct-axis current of the integrated vector current corresponding to the first heat-boosting current in the dq rotating coordinate system is not 0, and a quadrature-axis current is 0.

**11.** The method according to any one of claims 8 to 10, wherein the first motor is the SPM motor;

an integrated vector current corresponding to the second heat-boosting current in the dq rotating coordinate system is a second vector current, and an integrated vector current corresponding to the energy-saving current in the dq rotating coordinate system is an energy-saving vector current; and
a direct-axis current of the second vector current is equal to a direct-axis current of the energy-saving vector current, and an amplitude of the second vector current is equal to a maximum amplitude supported by the first motor.

**12.** The method according to any one of claims 8 to 10, wherein the first motor is the IPM motor;

an integrated vector current corresponding to the second heat-boosting current in the dq rotating coordinate system is a second vector current, and an integrated vector current corresponding to the energy-saving current in the dq rotating coordinate system is an energy-saving vector current;
the energy-saving vector current is a vector current that is capable of generating a target torque and that has a smallest amplitude; and
the second vector current is a vector current that is capable of generating the target torque and that has an amplitude greater than the amplitude of the energy-saving vector current, wherein
the amplitude of the second vector current is less than or equal to a maximum amplitude supported by the first motor.

**13.** The method according to any one of claims 8 to 10, wherein the integrated vector current corresponding to the first heat-boosting current in the dq rotating coordinate system is a first vector current, and the first vector current meets the following control objective:

an included angle between the first vector current and a d-axis is 0, and a through-current mode of the zero-torque vector current is an alternating-current mode, wherein
the alternating-current mode indicates that an amplitude of the first vector current changes with time.

**14.** The method according to claim 8 or 9 or claim 11 or 12, wherein in the dq rotating coordinate system, the integrated vector current corresponding to the second heat-boosting current in the dq rotating coordinate system is the second vector current, and the second vector current meets any one of the following control objectives:

a through-current mode of the second vector current is a direct-current mode, and an included angle between the second vector current and a d-axis changes with time; or
a through-current mode of the second vector current is an alternating-current mode, wherein
the direct-current mode indicates that an amplitude of the second vector current does not change with time, and the alternating-current mode indicates that an amplitude of the second vector current changes with time.

**15.** The method according to any one of claims 1 to 14, wherein an integrated vector current corresponding to the zero-torque current in the dq rotating coordinate system is a zero-torque vector current, and the zero-torque vector current meets the following control objective:

an included angle between the zero-torque vector current and the d-axis is 0, and a through-current mode of the zero-torque vector current is an alternating-current mode, wherein
the alternating-current mode indicates that an amplitude of the zero-torque vector current changes with time.

**16.** The method according to any one of claims 1 to 15, wherein the first motor comprises a motor cavity connected to an oil pipe, the motor cavity is configured to accommodate a stator and a rotor of the first motor, and an air gap between the stator and the rotor of the first motor is connected to the oil pipe; and
when the oil pump motor operates, the motor cavity is filled with oil, and the rotor is in contact with the oil in the motor cavity.

**17.** The method according to any one of claims 1 to 16, wherein before the injecting a heating current into a first motor, the method comprises:

obtaining a startup indication for a second motor, wherein the second motor is an oil-cooled motor, and the first motor is configured to drive cooling oil to flow to the second motor through the oil pipe; and

after the obtaining a startup indication for a second motor, the method further comprises:

starting the second motor; and
controlling the second motor to operate in a low-loss mode, wherein
heating power loss of the second motor in an operating condition when the second motor operates in the low-loss mode is less than a cold-state heat dissipation power threshold, the cold-state heat dissipation power threshold is determined based on the cold-state rotational speed threshold, the cold-state rotational speed threshold is a rotational speed that the first motor is capable of reaching when the oil temperature reaches the cold-state temperature threshold, and the cold-state rotational speed threshold is less than or equal to the preset temperature threshold.

18. The method according to claim 17, wherein the method further comprises:

when a rotational speed of the first motor is greater than or equal to a high-flow-rate rotational speed threshold, controlling the second motor to operate in a high-loss mode, wherein
heating power loss of the second motor in an operating condition when the second motor operates in the high-loss mode is greater than a high-speed-state heat dissipation power threshold, the high-speed-state heat dissipation power threshold is determined based on the high-speed-state rotational speed threshold, and the high-speed-state rotational speed threshold is a rotational speed that the first motor is capable of reaching when the oil temperature reaches the high-speed-state temperature threshold.

19. The method according to claim 17 or 18, wherein the second motor is a drive motor that drives a wheel in an electric vehicle to rotate, the electric vehicle further comprises a heat collection apparatus, the heat collection apparatus is a battery or a cockpit heating apparatus, the heat collection apparatus and the oil pipe form a heat exchange connection through a heat exchanger, and the heat exchanger is located on the oil pipe through which the cooling oil flows from the second motor to the first motor; and
before the obtaining a startup indication for a second motor, the method further comprises:
obtaining a startup indication for the heat collection apparatus.

20. A control apparatus, comprising a memory and a processor, wherein
the memory is configured to store instructions, and the processor is configured to execute the instructions to implement the method according to any one of claims 1 to 19.

21. An oil pump, comprising a first motor and a control apparatus, wherein the control apparatus is configured to perform the method according to any one of claims 1 to 19.

22. A heat exchange system, comprising a first motor, a control apparatus, a second motor, an oil pipe, a heat exchanger, and a heat collection apparatus, wherein

the second motor is an oil-cooled motor, the first motor is an oil pump motor in an oil pump, and the oil pump is configured to provide cooling oil for the second motor through the oil pipe;
the heat exchanger is located on the oil pipe through which the cooling oil flows from the second motor to the first motor, and the heat collection apparatus and the oil pipe form a heat exchange connection through the heat exchanger; and
the control apparatus is configured to perform the method according to any one of claims 1 to 19.

23. The system according to claim 22, wherein the heat collection apparatus is a battery or a cockpit heating apparatus.

First schematic diagram of a
structure of a motor

FIG. 1

Second schematic diagram of a structure of a motor

FIG. 2

Oil pipe

Oil pump cavity

Oil pipe

FIG. 3

Oil pump
81

Oil pump motor
82

Control apparatus
90

FIG. 4A

900

FIG. 4B

FIG. 4C

FIG. 5A

FIG. 5B

FIG. 5C

FIG. 5D

| Obtain a startup indication for a first motor when the first motor is in a non-started state | S101 |

| Determine whether the first motor meets a cold-state preheat condition; and if yes, S103 is performed; or if no, S104 is performed | S102 |

| Inject a preheat current into the first motor | S103 |

| Start the first motor | S104 |

FIG. 6

When a first motor is in a stalled state, determine whether the first motor meets a stalled-state heat boosting condition; and if yes, S112 is performed; or if no, S113 is performed — S111

Inject a first heat-boosting current into the first motor — S112

When the first motor is in a low-speed state, determine whether the first motor meets a low-speed-state heat boosting condition; and if yes, S114 is performed; or if no, S115 is performed — S113

Inject a second heat-boosting current into the first motor — S114

Inject an energy-saving current into the first motor — S115

FIG. 7

FIG. 8

FIG. 9

Heating power loss:
I > II > III

FIG. 10

Obtain a startup indication for a heat collection apparatus, and S302-1 and S303-1 are performed — **S301**

Inject a preheat current into a first motor when the first motor is in a stationary state — **S302-1**

Start a second motor, and set the second motor to operate in a low-loss mode — **S303-1**

Start the first motor — **S302-2**

Inject a heat-boosting current into the first motor when a rotational speed of the first motor is less than a high-speed-state rotational speed threshold — **S302-3**

Inject an energy-saving current into the first motor when a rotational speed of the first motor increases to the high-speed-state rotational speed threshold — **S302-4**

When the rotational speed of the first motor increases to the high-speed-state rotational speed threshold, set the second motor to operate in a high-loss mode — **S304**

When temperature of the heat collection apparatus reaches target temperature, set the second motor to operate in the low-loss mode — **S305**

FIG. 11

1200

Obtaining module
1203

Injection module
1202

Processing module
1201

Storage module
1204

FIG. 12

1300

Processor
1310

Interface
1330

Memory
1330

Bus 1360

FIG. 13

# EP 4 340 210 A1

<table>
<tr><td colspan="2"><b>INTERNATIONAL SEARCH REPORT</b></td><td colspan="2">International application No.<br><b>PCT/CN2021/103273</b></td></tr>
</table>

| A. | CLASSIFICATION OF SUBJECT MATTER |
|---|---|

H02P 21/14(2016.01)i; H02P 21/20(2016.01)i; H02P 21/22(2016.01)i; F04D 13/06(2006.01)i; F04D 15/00(2006.01)i; F04D 29/58(2006.01)i

According to International Patent Classification (IPC) or to both national classification and IPC

| B. | FIELDS SEARCHED |
|---|---|

Minimum documentation searched (classification system followed by classification symbols)

H02P; F04D

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; IEEE: 华为, 油, 粘度, 粘稠, 低温, 加热, 发热, 节能, 电流, 零转矩, 电机, 电动机, 马达, 启动, IPM, SPM, heat, current, oil, viscosity, temperature, efficient, torque, start+, motor

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2011095717 A1 (HONDA MOTOR CO., LTD.) 28 April 2011 (2011-04-28)<br>description, paragraphs [0002]-[0077], and figures 1-9 | 1-23 |
| A | JP 2003339101 A (TOYOTA MOTOR CORP.) 28 November 2003 (2003-11-28)<br>entire document | 1-23 |
| A | CN 110985390 A (GREE GREEN REFRIGERATION TECHNOLOGY CENTER CO., LTD. OF ZHUHAI) 10 April 2020 (2020-04-10)<br>entire document | 1-23 |
| A | CN 107276316 A (DENSO CORP.) 20 October 2017 (2017-10-20)<br>entire document | 1-23 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2022** | **21 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/103273**

| Patent document cited in search report | | | Publication date (day/month/year) | Patent family member(s) | | | Publication date (day/month/year) |
|---|---|---|---|---|---|---|---|
| US | 2011095717 | A1 | 28 April 2011 | JP | 2011089625 | A | 06 May 2011 |
| | | | | JP | 4881991 | B2 | 22 February 2012 |
| | | | | US | 8604738 | B2 | 10 December 2013 |
| JP | 2003339101 | A | 28 November 2003 | JP | 3918631 | B2 | 23 May 2007 |
| CN | 110985390 | A | 10 April 2020 | CN | 110985390 | B | 18 June 2021 |
| CN | 107276316 | A | 20 October 2017 | JP | 2017189051 | A | 12 October 2017 |
| | | | | US | 2017294865 | A1 | 12 October 2017 |
| | | | | US | 10516363 | B2 | 24 December 2019 |
| | | | | DE | 102017107314 | A1 | 12 October 2017 |
| | | | | CN | 107276316 | B | 29 January 2021 |

Form PCT/ISA/210 (patent family annex) (January 2015)